# EUROPEAN PATENT APPLICATION

(11) **EP 4 621 893 A1**
(43) Date of publication of application: **24.09.2025**
(21) Application number: 23895057.0
(22) Date of filing: 23.11.2023
(51) Int. Cl.: H01M 10/04, H01M 50/466, H01M 50/403

(54) **LAMINATION DEVICE AND ELECTRODE ASSEMBLY MANUFACTURING METHOD**

(30) Priority: 23.11.2022 KR 20220158385
(71) Applicant: LG Energy Solution, Ltd., Seoul 07335 (KR)
(72) Inventor: KIM, Daewook, Daejeon 34122 (KR)
(74) Representative: Plasseraud IP
(86) International application number: PCT/KR2023/019035
(87) International publication number: WO 2024/112130

(57) **Abstract**

The present invention provides a lamination apparatus comprising: a transport unit transporting, in a first direction intersecting a vertical direction, an electrode stack 500 formed by alternately stacking electrode 510, 520 and 550 and separator 530 and 540 in the vertical direction; and a sealing unit 200 sealing the electrode stack (500) transported by the transport unit, and sealing an end portion of the electrode stack (500) in a second direction intersecting the vertical direction and the first direction while moving toward one side or other side of the second direction. As a result, the quality of manufactured electrode assembly may be significantly improved.

## Description

### [TECHNICAL FIELD]

This application claims the benefit of priority based on Korean Patent Application No. 10-2022-0158385 filed on November 23, 2022, entire content disclosed in the document of the patent application is included as a part of this specification.

The present invention relates to a lamination apparatus and a manufacturing method of electrode assembly, and more specifically, to a lamination apparatus and a manufacturing method of electrode assembly capable of improving the quality of the manufactured electrode assembly with a simple configuration, shortening manufacturing time and reducing manufacturing cost.

### [BACKGROUND ART]

Secondary batteries, unlike primary batteries, may be recharged and made compact and to have high capacity such that secondary batteries have been extensively researched and developed in recent years. In particular, as technology development and demand for mobile devices increase, the demand for secondary batteries as an energy source is rapidly increasing.

Inside secondary batteries, an electrode assembly or unit cell in which positive electrode, separator and negative electrode are alternately stacked may be inserted. The separator for electrochemical cells used here is an intermediate film that isolates the positive electrode and negative electrode within the battery while continuously maintaining ionic conductivity to allow charging and discharging of the battery.

However, when the battery is exposed to a high temperature environment due to non-ideal behavior, the separator is mechanically shrunk or damaged due to its melting characteristics at low temperatures. In such case, the positive electrode and the negative electrode may come into contact with each other, causing the battery to ignite. To overcome such problems, technology for suppressing the shrinkage of the separator and ensuring the stability of the battery is necessary.

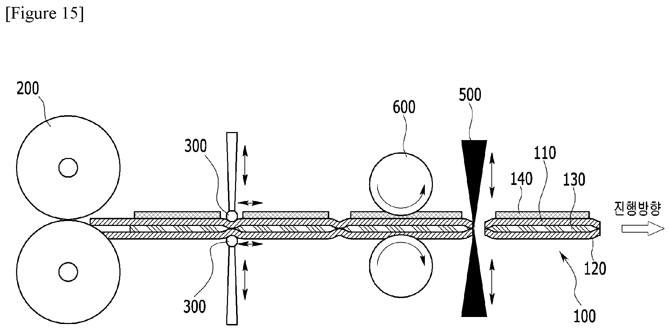

One way to solve such problem is to seal the side portions of multiple separator and attach the same to each other. For example, like the conventional lamination apparatus of FIG. 15, a pressing member 300 may press a first separator 110 and a second separator 120 disposed in the space between the negative electrode s 130 toward each other. However, since the electrode are alternately stacked with the separator, the separator may not be properly sealed even when the lamination apparatus is used. Additionally, the lamination apparatus can only seal the part of the separator between electrode (left and right sides of the electrode) and cannot seal both ends (front and rear) of the separator where the electrode tab is located.

### [DISCLOSURE]

### [TECHNICAL PROBLEM]

In order to solve the above-mentioned problems, it is an object of the present invention to provide a lamination apparatus and a manufacturing method of electrode assembly capable of significantly improving the quality of the manufactured electrode assembly.

It is an object of the present invention to provide a lamination apparatus and a manufacturing method of electrode assembly capable of improving the quality of the manufactured electrode assembly with a simple configuration, shortening manufacturing time and reducing manufacturing cost.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

**In** order to solve the above-mentioned problems, the present invention provides a lamination apparatus 10 including: a transport unit; and a sealing unit 200.

The transport unit may transport, in a first direction intersecting a vertical direction, an electrode stack (500) formed by alternately stacking electrode (510, 520, 550) and separator (530, 540) in the vertical direction.

The sealing unit (200) may seal the electrode stack (500) transported by the transport unit, and seal an end portion of the electrode stack (500) in a second direction intersecting the vertical direction and the first direction while moving toward one side or other side of the second direction, and seal a portion of the end portion of the electrode stack (500) in the second direction that comprises a portion overlapping in the first direction with end portion of the electrode (510, 520, 550) in the second direction.

In one embodiment, the sealing unit (200) may seal the end portion of the electrode stack (500) in the second direction while moving toward the one side or the other side of the second direction and moving from inside to outside of the electrode stack (500).

In one embodiment, the lamination apparatus (10) may further include a lamination unit (100).

The lamination unit (100) may press and bond the electrode stack (500) transported by the transport unit, and at least partially press and bond a center portion of the electrode stack (500) in the second direction.

The sealing unit (200) may seal the electrode stack (500) with the center portion in the second direction at least partially bonded by the lamination unit (100).

In one embodiment, the electrode (510, 520, 550) may include: body (512, 522, 552) at a center; and tab (514, 524, 554) protruding from the body (512, 522, 552) toward the one side or the other side of the second direction.

The separator (530, 540) may include extensions (532, 542).

The extensions (532, 542) may extend further toward the one side or the other side of the second direction than the body (512, 522, 552) of the electrode (510, 520, 550).

The extensions (532, 542) may face or be in contact with the tab (514, 524, 554) in the vertical direction.

The end portion of the electrode stack (500) in the second direction sealed by the sealing unit (200) may include at least portions of the extensions (532, 542).

In one embodiment, the sealing unit (200) may include a press unit (210).

The press unit (210) may contact the electrode stack (500).

The press unit (210) may press the electrode stack (500) while moving toward the one side or the other side of the second direction.

The press unit (210) may include at least one of an upper press unit (212) and a lower press unit (214).

The upper press unit (212) may be disposed above the electrode stack (500).

The upper press unit (212) may move toward the one side or the other side of the second direction while pressing the electrode stack (500) downward.

The lower press unit (214) may be disposed under the electrode stack (500).

The lower press unit (214) may move toward the one side or the other side of the second direction while pressing the electrode stack (500) upward.

The press unit (210), the upper press unit (212) and lower press unit (214) may be rollers, respectively.

In one embodiment, the press unit (210) may include the upper press unit (212) and the lower press unit (214).

In one embodiment, the electrode (510, 520 550) may include: body (512, 522, 552) at a center; and tab (514, 524, 554) protruding from the body (512, 522, 552), in a direction intersecting the vertical direction.

The separator (530, 540) may include extensions (532, 542) extending further in the second direction than the body (512, 522, 552) of the electrode (510, 520, 550).

The end portion of the electrode stack (500) in the second direction sealed by the sealing unit (200) may include at least portions of the extensions (532, 542).

A diameter (D) of the press unit (210) of the sealing unit (200) is 0.5 to 5 times the width (E) of the extensions (532, 542) in the second direction.

In one embodiment, the electrode (510, 520, 550) may include a plurality of electrode piece (510a, 520a, 550a) on the separator (530, 540) arranged side by side and spaced apart from one another by a predetermined distance in the first direction, respectively.

Each electrode piece (510a, 520a, 550a) may include: body (512, 522, 552) at a center; and tab (514, 524, 554) protruding from the body (512, 522, 552), in a direction intersecting the vertical direction.

The separator (530, 540) may include extensions (532, 542) extending further in the second direction than the body (512, 522, 552) of the electrode piece (510a, 520a, 550a).

The end portion of the electrode stack (500) in the second direction sealed by the sealing unit (200) may include at least portions of the extensions (532, 542).

The sealing unit (200) may include a press unit (210).

The press unit (210) may contact the electrode stack (500).

The press unit (210) may press the electrode stack (500) while moving toward the one side or the other side of the second direction.

A length (L) of the press unit (210) in the first direction may be greater than the width (W) of the body (512, 522, 552) of each electrode piece (510a, 520a, 550a) in the first direction.

The press unit 210 is arranged to completely overlap in the first direction with the body (512, 522, 552) of n electrode piece (510a, 520a, 550a) arranged consecutively when the electrode stack (500) is transported by the transport unit (where n is a natural number equal to or greater than 1).

In one embodiment, the tab (514, 524, 554) of the electrode piece (510a, 520a, 550a) may protrude from the body (512, 522, 552) of the electrode piece (510a, 520a, 550a) toward the one side or the other side of the second direction.

The extensions (532, 542) may extend further to the one side or the other side of the second direction than the body (512, 522, 552).

The extensions (532, 542) may face or be in contact with the tab (514, 524, 554) in the vertical direction.

The press unit (210) may be a roller.

The press unit (210) may include n+1 pressing portions (P).

The n+1 pressing portions (P) may be pressed toward the electrode stack (500) when sealing the one end or the other end of the electrode stack (500) in the second direction.

The n+1 pressing portions (P) may spaced apart from one another in the first direction.

The n+1 pressing portions (P) may be two ends of the press unit (210) in the first direction; and n-1 portions of the press unit (210) in the first direction.

The n-1 portions of the press unit (210) in the first direction may at least partially overlap with or adjacent to n-1 sections (S) between the n electrode piece (510a, 520a, 550a) in the first direction, resprectively.
the tab (514, 524, 554) of the n electrode piece (510a, 520a, 550a) are located between the n+1 pressing portions (P) in the first direction.

In one embodiment, the sealing unit (200) may include a press unit (210).

The press unit (210) may contact the electrode stack (500).

The press unit (210) may press the electrode stack (500) while moving toward the one side or the other side of the second direction.

The transport unit transports the electrode stack (500) in the first direction by per unit distance (U).

The press unit (210) may seal a portion of the electrode stack (500) in contact with the press unit (210) each time the electrode stack (500) is transported by the unit distance (U).

A width (RW) of the portion in the first direction or the length (L) of the press unit (210) in the first direction may be equal to or greater than the unit distance (U).

In one embodiment, the sealing unit (200) may be heated.

In addition, in order to solve above-described problems, the present invention provides a lamination apparatus including: a sealing unit (200).

The sealing unit (200) may seal an electrode stack 500 formed by alternately stacking electrode (510, 520, 550) and separator (530, 540) in vertical direction.

The sealing unit (200) may include a first sealing unit (200a) and a second sealing unit (200b).

The first sealing unit (200a) may seal one end portion of the electrode stack (500) in a second direction intersecting the vertical direction while moving toward one side of the second direction, and seal a portion of the one end portion of the electrode stack (500) in the second direction that comprises a portion overlapping in a first direction with one end portion of the electrode (510, 520, 550) in the second direction.

The second sealing unit (200b) may seal other end portion of the electrode stack (500) in the second direction while moving toward other side of the second direction, and seal a portion of the other end portion of the electrode stack (500) in the second direction that comprises a portion overlapping in the first direction with the other end portion of the electrode (510, 520, 550) in the second direction.

In addition, in order to solve above-described problems, the present invention provides a manufacturing method (S700) of electrode assembly including a sealing step (S720).

In the sealing step (S720), a sealing unit (200) may seal the electrode stack (500) transported by the transport unit, and seal the end portion of an electrode stack (500) in a second direction while moving toward the one side or the other side of a second direction.

In one embodiment, in the sealing step (S720), the sealing unit (200) may move toward the one side or the other side of the second direction, and seal the end portion of the electrode stack (500) in the second direction while moving from inside to outside of the electrode stack (500).

In one embodiment, the lamination apparatus may include a lamination unit (100) or a cutting unit (300).

The lamination unit (100) may press and bond the electrode stack (500) transported by the transport unit and at least partially press and bond a center portion of the electrode stack (500) in the second direction.

The cutting unit (300) may cut the electrode stack (500).

The manufacturing method of electrode assembly may further include a lamination step (S710) or a cutting step (S730).

In the lamination step (S710), the lamination unit (100) may at least partially press and bond a center portion of the electrode stack (500) in the second direction transported by the transport unit.

In the cutting step (S730), the cutting unit (300) may cut the electrode stack (500).

The lamination step (S710) may be performed before the sealing step (S720).

The cutting step (S730) may be performed after the sealing step (S720).

In one embodiment, in the sealing step (S720), the upper press unit (212), as a roller, may move toward the one side or the other side of the second direction while pressing the electrode stack (500) downward, or the lower press unit (214), as a roller, may move to the one side or the other side of the second direction while pressing the electrode stack (500) upward.

In one embodiment, in the sealing step (S720), the press unit (210) may seal an end portion of the electrode stack (500) in the second direction, and seal an end portion of the electrode stack (500) in the second direction including entirety of sections in the first direction corresponding to the n electrode piece (510a, 520a, 550a) consecutively arranged in the first direction (where n is a natural number equal to or greater than 1).

In one embodiment, in the sealing step (S720), the n+1 pressing portions (P) of the press unit (210) may be pressed toward the electrode stack (500).

In one embodiment, in the sealing step (S720), the portion of the electrode stack (500) sealed by the press unit (210) after the electrode stack (500) is transported by the transport unit by the unit distance (U) is in contact with or partially overlaps a portion of the electrode stack (500) sealed by the press unit (210) before the electrode stack (500) is transported by the transport unit by the unit distance (U).

In one embodiment, the sealing unit (200) may be heated in the sealing step (S720).

**In** one embodiment, in the sealing step (S720), the first sealing unit (200a) may seal one end of the electrode stack (500) in the second direction while moving toward the one side of the second direction, and the second sealing unit (200b) may seal other end of the second direction of the electrode stack (500) while moving toward the other side of the second direction.

### [ADVANTTAGEOUS EFFECTS]

According to an embodiment of the present invention, the lamination apparatus (10) may include: a transport unit transporting, in a first direction intersecting a vertical direction, an electrode stack (500) formed by alternately stacking electrode (510, 520, 550) and separator (530, 540) in the vertical direction; and a sealing unit (200) sealing the electrode stack (500) transported by the transport unit, and sealing an end portion of the electrode stack (500) in a second direction intersecting the vertical direction and the first direction while moving toward one side or other side of the second direction.

Accordingly, the end portion of the electrode stack 500 in the second direction is sealed in the second direction that intersects the transporting direction (first direction) of the electrode stack 500 such that the end portion of the electrode stack 500 in the second direction is stably and uniformly sealed with high quality, and the bonding strength between the separator 530 and 540 and the electrode 510, 520 and 550 may be significantly improved. This is because the width of the end portion of the electrode stack 500 in the second direction that the sealing unit 200 seals is smaller than the width in the first direction such that sealing in the second direction is effective. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

According to an embodiment of the present invention, the sealing unit (200) may seal the end portion of the electrode stack (500) in the second direction while moving toward the one side or the other side of the second direction and moving from inside to outside of the electrode stack (500).

Accordingly, the empty space inside the electrode stack 500 may be sealed by pushing the same to the outside of the electrode stack 500. In addition, the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the end portion of the electrode stack 500 in the second direction may be sealed stably, uniformly, and with high quality, and the bonding strength between the separator 530 and 540 and the electrode 510, 520 and 550 may be significantly improved. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

According to an embodiment of the present invention, the lamination apparatus may further include a lamination unit (100), which presses and bonds the electrode stack (500) transported by the transport unit, and at least partially presses and bonds a center portion of the electrode stack (500) in the second direction. The sealing unit (200) may seal the electrode stack (500) with the center portion in the second direction at least partially bonded by the lamination unit (100).

Accordingly, since the sealing unit 200 seals the end portion in the second direction of the electrode stack 500 having at least portion of the center portion thereof in the second direction bonded by the lamination unit 100, the end portion of the electrode stack 500 in the second direction may be sealed stably, uniformly, and with high quality, and the bonding strength between the separator 530 and 540 and the electrode 510, 520 and 550 may be improved. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

According to an embodiment of the present invention, the electrode (510, 520, 550) may include: body (512, 522, 552) at a center; and tab (514, 524, 554) protruding from the body (512, 522, 552) toward the one side or the other side of the second direction. The separator (530, 540) may include extensions (532, 542) extending further toward the one side or the other side of the second direction than the body (512, 522, 552) of the electrode (510, 520, 550), the extensions (532, 542) facing or in contact with the (tab 514, 524, 554) in the vertical direction. The end portion of the electrode stack (500) in the second direction sealed by the sealing unit (200) may include at least portions of the extensions (532, 542).

Accordingly, the end portion of the electrode stack (500) in the second direction, where the tab (514, 524, 554) of the electrode (510, 520, 550) are located, may be sealed stably, uniformly, and with high quality, and the bonding strength between the separator (530, 540) and the electrode (510, 520, 550) may be significantly improved. Therefore, the quality of the stack unit (500a) manufactured by the lamination apparatus (10), the quality of the electrode assembly with stacked stack units (500a) or the quality of the electrode assembly manufactured by folding of the electrode stack (500) sealed by the lamination apparatus (10) may be significantly improved.

According to an embodiment of the present invention, the sealing unit (200) may include a press unit (210) moving toward the one side or the other side of the second direction while contacting and pressing the electrode stack (500). The press unit (210) may include at least one of: an upper press unit (212) disposed above the electrode stack (500) and moving toward the one side or the other side of the second direction while pressing the electrode stack (500) downward; and a lower press unit (214) disposed at a lower portion of (500) and pressing the electrode stack (500) upward while moving toward the one side or the other side of the second direction. The press unit (210), the upper press unit (212) and lower press unit (214) may be rollers, respectively.

Accordingly, since the press unit 210 is a roller, the friction force between the press unit 210 and the electrode stack 500 is reduced when the press unit 210 seals the end portion of the electrode stack 500 in the second direction while moving to one side or the other side of the second direction such that a large force is not applied to the electrode stack 500 in the second direction. As a result, separate equipment for fixing the electrode stack 500 in the second direction is not necessary, or the electrode stack 500 may be quickly and easily fixed in the second direction with simple equipment. In addition, since the press unit 210 is a roller, the end portion of the electrode stack 500 in the second direction may be sealed stably, uniformly, quickly and with high quality, and the bonding strength between the separator 530 and 540 and the electrode 510, 520 and 550 may be improved. Therefore, with a simple configuration, the quality of the stack unit 500a, the quality of the electrode assembly with stacked stack units 500a or the quality of the electrode assembly manufactured by folding of the electrode stack 500 may be significantly improved and manufacturing time may be shortened to reduce manufacturing costs.

According to an embodiment of the present invention, the press unit (210) may include the upper press unit (212) and the lower press unit (214).

Accordingly, since the press unit 210 (roller) includes two rollers of the upper and lower portions, the friction force between the press unit 210 and the electrode stack 500 is further reduced such that separate equipment for fixing the electrode stack 500 in the second direction is not necessary, or the electrode stack 500 may be quickly and easily fixed in the second direction with simple equipment. In addition, the end portion of the electrode stack 500 in the second direction may be may be sealed more stably, uniformly, quickly and with high quality, and the bonding strength between the separator 530 and 540 and the electrode 510, 520 and 550 may be improved. Therefore, with a simple configuration, the quality of the stack unit 500a, the quality of the electrode assembly with stacked stack units 500a or the quality of the electrode assembly manufactured by folding of the electrode stack 500 may be significantly improved and manufacturing time may be shortened to reduce manufacturing costs.

According to an embodiment of the present invention, the electrode (510, 520, 550) may include: body (512, 522, 552) at a center; and tab (514, 524, 554) protruding from the body (512, 522, 552), in a direction intersecting the vertical direction. The separator (530, 540) may include extensions (532, 542) extending further in the second direction than the body (512, 522, 552) of the electrode (510, 520, 550). The end portion of the electrode stack (500) in the second direction sealed by the sealing unit (200) may include at least portions of the extensions (532, 542). A diameter (D) of the press unit (210) of the sealing unit (200) is 0.5 to and 5 times the width (E) of the extensions (532, 542) in the second direction.

Accordingly, since the diameter D of the press unit 210 (roller) is small, the position, moving direction, pressing force, or temperature of the press unit 210 or the like may be controlled in detail and accurately such that the end portion of the electrode stack 500 in the second direction including at least a portion of the extension 532 and 542 may be sealed stably, uniformly, and with high quality, and the bonding strength between the separator 530 and 540 and the electrode 510, 520 and 550 may be improved even when the width E of the extension 532 and 542 in the second direction is small. Therefore, the quality of the stack unit 500a manufactured by the lamination apparatus 10, the quality of the electrode assembly with stacked stack units 500a or the quality of the electrode assembly manufactured by folding of the electrode stack 500 may be significantly improved.

According to an embodiment of the present invention, the electrode 510, 520 and 550 may include a plurality of electrode piece 510a, 520a and 550a on the separator 530 and 540 arranged side by side and spaced apart from one another by a predetermined distance in the first direction, respectively, each electrode piece 510a, 520a and 550a including: body 512, 522 and 552 at a center; and tab 514, 524 and 554 protruding from the body 512, 522 and 552, in a direction intersecting the vertical direction. The separator 530 and 540 may include extensions 532 and 542 extending further in the second direction than the body 512, 522 and 552 of the electrode piece 510a, 520a and 550a. The end portion of the electrode stack (500) in the second direction sealed by the sealing unit (200) may include at least portions of the extensions 532 and 542. The sealing unit 200 may include a press unit 210 moving toward the one side or the other side of the second direction while contacting and pressing the electrode stack 500. A length L of the press unit 210 in the first direction may be greater than the width W in the first direction of the body 512, 522 and 552 of each electrode piece 510a, 520a and 550a. The press unit 210 may be arranged to completely overlap in the first direction with the body 512, 522 and 552 of n electrode piece 510a, 520a and 550a, respectively, arranged consecutively when the electrode stack 500 is transported by the transport unit (where n is a natural number equal to or greater than 1).

Accordingly, when the electrode stack 500 is transported by the transport unit, the extensions 532 and 542 located at one side or the other side of the second direction of the n electrode piece 510a, 520a and 550a may be uniformly sealed at once as the press unit 210 moves toward one side or the other side of the second direction while pressing the end portion of the electrode stack 500 in the second direction, and the bonding strength between the separator 530 and 540 and the electrode 510, 520 and 550 may be improved. Therefore, with a simple configuration, the quality of the stack unit 500a, the quality of the electrode assembly with stacked stack units 500a or the quality of the electrode assembly manufactured by folding of the electrode stack 500 may be significantly improved and manufacturing time may be shortened to reduce manufacturing costs.

According to an embodiment of the present invention, the tab 514, 524 and 554 of the electrode piece 510a, 520a and 550a may protrude from the body 512, 522 and 552 of the electrode piece 510a, 520a and 550a toward the one side or the other side of the second direction. The extensions 532 and 542 of the separator 530 and 540 may extend further to the one side or the other side of the second direction than the body 512, 522 and 552 of the electrode piece 510a, 520a and 550a, and the extensions 532 and 542 facing or in contact with the tab 514, 524 and 554 of the electrode piece 510a, 520a and 550a in the vertical direction. The press unit 210 may be a roller and may include (n+1) pressing portions P spaced apart in the first direction, the (n+1) pressing portions P being pressed toward the electrode stack 500 when sealing the one end or the other end of the electrode stack 500 in the second direction, the (n+1) pressing portions P being two ends of the press unit 210 in the first direction and (n-1) portions of the press unit 210 in the first direction at least partially overlapping with or adjacent to (n-1) sections S between the n electrode piece 510a, 520a and 550a in the first direction, respectively. The tab 514, 524 and 554 of the n electrode piece 510a, 520a and 550a may be located between the (n+1) pressing portions P in the first direction.

Accordingly, when pressing and sealing the end portion of the stack unit 500a in the second direction with the press unit 210, which is a roller, it is not necessary to press the entire press unit 210, but only (n+1) pressing portions P including the two ends of the press unit 210 in the first direction, the press unit 210 and sealing unit 200 may be easily constructed at low cost with a simple configuration. Therefore, the manufacturing cost of the stack unit 500a may be reduced.

In addition, since the width of each electrode piece 510a, 520a and 550a in the first direction is small, even when only the two ends of the press unit 210 in the first direction and the (n-1) portions of the press unit 210 are pressed, wherein the (n-1) portions of the press unit 210 overlap at least partially with or adjacent to the (n-1) sections S in the first direction between the n electrode piece 510a, 520a and 550a in the first direction, the end portion of a portion of the electrode stack 500 in the second direction including portions corresponding to n electrode piece 510a, 520a and 550a in the first direction, or an end portion of the n stack units 500a in the second direction may be sealed stably, uniformly, and with high quality all at once, and the bonding strength between the separator 530 and 540 and the n electrode piece 510a, 520a and 550a may be improved. As a result, with simple configuration, the quality of the stack unit 500a, the quality of the electrode assembly with stacked stack units 500a or the quality of the electrode assembly manufactured by folding of the electrode stack 500 may be improved and manufacturing costs may be reduced.

In particular, since the n tab 514, 524 and 554 of the n electrode piece 510a, 520a and 550a are positioned among (n+1) pressing portions P of the press unit 210 in the first direction, the thickness of the end portion of the electrode stack 500 in the second direction sealed by the portions between the (n+1) pressing portions P of the press unit 210 may be greater than that of the end portion of the electrode stack 500 in the second direction pressed by the (n+1) pressing portions P of the press unit 210. Therefore, when only (n+1) pressing portions P of the press unit 210 are pressed, the end portion of a portion of the electrode stack 500 in the second direction including a portion corresponding to the n electrode piece 510a, 520a and 550a in the first direction or the end portion of the n stack units 500a in the second direction may be sealed more uniformly, and the bonding strength between the separator 530 and 540 and the n electrode piece 510a, 520a and 550a may be improved.

According to an embodiment of the present invention, the sealing unit 200 may include a press unit 210 moving toward the one side or the other side of the second direction while contacting and pressing the electrode stack 500. The transport unit may transport the electrode stack 500 in the first direction by per unit distance U. The press unit 210 may seal a portion of the electrode stack 500 in contact with the press unit 210 each time the electrode stack 500 may be transported by the unit distance U. A width RW of the portion in the first direction or the length L of the press unit 210 in the first direction may be equal to or greater than the unit distance U.

Accordingly, the end portion of the electrode stack 500 in the second direction may be sealed by the press unit 210 without missing portions. In particular, when the width RW of the area of the electrode stack 500 in the first direction in contact with the press unit 210 or the length L of the press unit 210 in the first direction is greater than the unit distance U, the area to be sealed may partially overlap with the area sealed by the press unit 210 immediately before each time the press unit 210 seals the end portion of the electrode stack 500 in the second direction. Therefore, it is possible to prevent the end portion of the electrode stack 500 in the second direction from being not sealed due to errors in the position and size of the electrode (piece), errors in the transport distance of the transport unit, and position errors in the press unit 210. As a result, with simple configuration, the quality of the stack unit 500a, the quality of the electrode assembly with stacked stack units 500a or the quality of the electrode assembly manufactured by folding of the electrode stack 500 may be improved.

According to an embodiment of the present invention, the sealing unit 200 may be heated.

Accordingly, the end portion of the electrode stack 500 in the second direction may be sealed stably, uniformly, and with high quality, and the bonding strength between the separator 530 and 540 and the electrode 510, 520 and 550 may be improved. Therefore, the quality of the stack unit 500a, the quality of the electrode assembly with stacked stack units 500a or the quality of the electrode assembly manufactured by folding of the electrode stack 500 may be improved.

According to an embodiment of the present invention, the lamination apparatus 10 may include: a sealing unit 200 sealing an electrode stack 500 formed by alternately stacking electrode 510, 520 and 550 and separator 530 and 540 in vertical direction. The sealing unit 200 may include: a first sealing unit 200a sealing one end portion of the electrode stack 500 in a second direction intersecting the vertical direction while moving toward one side of the second direction; and a second sealing unit 200b sealing other end portion of the electrode stack 500 in the second direction while moving toward other side of the second direction.

Accordingly, since the two ends of the electrode stack 500 in the second direction are sealed in the second direction, the two ends of the electrode stack 500 in the second direction may be sealed stably, uniformly, and with high quality, and the bonding strength between the separator 530 and 540 and the electrode 510, 520 and 550 may be significantly improved. This is because the width of the two ends in the second direction of the electrode stack 500 sealed by the sealing unit 200 is smaller than the width in the first direction such that sealing in the second direction is effective. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

In addition, since the two ends of the electrode stack 500 in the second direction are sealed from the inside to the outside of the stack unit 500a, the empty space inside the electrode stack 500 may be sealed by pushing the same to the outside of the electrode stack 500, and the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the two end portion of the electrode stack 500 in the second direction may be sealed stably, uniformly, and with high quality, and the bonding strength between the separator 530 and 540 and the electrode 510, 520 and 550 may be significantly improved. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

According to an embodiment of the present invention, a manufacturing method (S700) of electrode assembly may include: a sealing step (S720) wherein a sealing unit (200) may seal the electrode stack (500) transported by the transport unit, and seal the end portion of an electrode stack (500) in a second direction while moving toward the one side or the other side of a second direction.

Accordingly, the end portion of the electrode stack 500 in the second direction is sealed in the second direction that intersects the transporting direction (first direction) of the electrode stack 500 such that the end portion of the electrode stack 500 in the second direction is stably and uniformly sealed with high quality, and the bonding strength between the separator 530 and 540 and the electrode 510, 520 and 550 may be significantly improved. This is because the width of the end portion of the electrode stack 500 in the second direction that the sealing unit 200 seals is smaller than the width in the first direction such that sealing in the second direction is effective. Therefore, the quality of the electrode assembly manufactured by the manufacturing method S700 thereof may be significantly improved.

According to an embodiment of the present invention, in the sealing step S720, the sealing unit 200 may move toward the one side or the other side of the second direction, and seal the end portion of the electrode stack 500 in the second direction while moving from inside to outside of the electrode stack 500.

Accordingly, the empty space inside the electrode stack 500 may be sealed by pushing the same to the outside of the electrode stack 500. In addition, the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the end portion of the electrode stack 500 in the second direction may be sealed stably, uniformly, and with high quality, and the bonding strength between the separator 530 and 540 and the electrode 510, 520 and 550 may be significantly improved. Therefore, the quality of the electrode assembly manufactured by the manufacturing method S700 thereof may be significantly improved.

According to an embodiment of the present invention, the lamination apparatus may include: a lamination unit 100 pressing and bonding the electrode stack 500 transported by the transport unit and at least partially pressing and bonding a center portion of the electrode stack 500 in the second direction; or a cutting unit 300 cutting the electrode stack 500. The manufacturing method of electrode assembly may further include: a lamination step S710 wherein the lamination unit 100 at least partially presses and bonds a center portion of the electrode stack 500 in the second direction transported by the transport unit; or a cutting step S730 wherein the cutting unit 300 cuts the electrode stack 500. The lamination step S710 may be performed before the sealing step S720. The cutting step S730 may be performed after the sealing step S720.

Accordingly, since the sealing step S720 of sealing the end portion of the electrode stack 500 in the second direction is performed after the lamination step S710 of at least partially bonding the center portion of the electrode stack 500 in the second direction, the end portion of the electrode stack 500 in the second direction may be sealed stably, uniformly, and with high quality, and the bonding strength between the separator 530 and 540 and the electrode 510, 520 and 550 may be improved. Therefore, the quality of the electrode assembly manufactured by the manufacturing method S700 thereof may be significantly improved.

In addition, since the sealing step S720 of sealing the end portion of the electrode stack 500 in the second direction is performed before the cutting step S730 of cutting the electrode stack 500, equipment for fixing or aligning the electrode stack 500 is not necessary, or the electrode stack 500 may be quickly and easily fixed or aligned with simple equipment. As a result, the end portion of the electrode stack 500 in the second direction may be sealed easily and at low cost.

According to an embodiment of the present invention, in the sealing step S720, the upper press unit 212, as a roller, may move toward the one side or the other side of the second direction while pressing the electrode stack 500 downward, or the lower press unit 214, as a roller, moves to the one side or the other side of the second direction while pressing the electrode stack 500 upward.

Accordingly, since the press unit 210 is a roller, the friction force between the press unit 210 and the electrode stack 500 is reduced when the press unit 210 seals the end portion of the electrode stack 500 in the second direction while moving to one side or the other side of the second direction such that a large force is not applied to the electrode stack 500 in the second direction. As a result, separate equipment for fixing the electrode stack 500 in the second direction is not necessary, or the electrode stack 500 may be quickly and easily fixed in the second direction with simple equipment. In addition, since the press unit 210 is a roller, the end portion of the electrode stack 500 in the second direction may be sealed stably, uniformly, quickly and with high quality, and the bonding strength between the separator 530 and 540 and the electrode 510, 520 and 550 may be improved. Therefore, with simple configuration, the quality of the electrode assembly may be improved, manufacturing time may be shortened, and manufacturing costs may be reduced.

According to an embodiment of the present invention, in the sealing step S720, the press unit 210 may seal an end portion of the electrode stack 500 in the second direction, and seals an end portion of the electrode stack 500 in the second direction including entirety of sections in the first direction corresponding to the n electrode piece 510a, 520a and 550a consecutively arranged in the first direction.

Accordingly, when the electrode stack 500 is transported by the transport unit, the extensions 532 and 542 located at one side or the other side of the second direction of the n electrode piece 510a, 520a and 550a may be uniformly sealed at once as the press unit 210 moves toward one side or the other side of the second direction while pressing the end portion of the electrode stack 500 in the second direction, and the bonding strength between the separator 530 and 540 and the n electrode piece 510a, 520a and 550a may be improved. As a result, the end portions of the stack unit 500a in the second direction can be sealed uniformly, quickly, and at low cost, and the bonding strength between the separators 530 and 540 and the electrodes 510, 520, and 550 may be improved. Therefore, with simple configuration, the quality of the electrode assembly may be improved, manufacturing time may be shortened, and manufacturing costs may be reduced.

According to an embodiment of the present invention, in the sealing step S720, the (n+1) pressing portions P of the press unit 210 may be pressed toward the electrode stack 500.

Accordingly, when pressing and sealing the end portion of the stack unit 500a in the second direction with the press unit 210, which is a roller, it is not necessary to press the entire press unit 210, but only (n+1) pressing portions P including the two ends of the press unit 210 in the first direction, the press unit 210 and sealing unit 200 may be easily constructed at low cost with a simple configuration. Therefore, the manufacturing cost of the stack unit 500a may be reduced.

In addition, since the width of each electrode piece 510a, 520a and 550a in the first direction is small, even when only the two ends of the press unit 210 in the first direction and the (n-1) portions of the press unit 210 are pressed, wherein the (n-1) portions of the press unit 210 overlap at least partially with or adjacent to the (n-1) sections S in the first direction between the n electrode piece 510a, 520a and 550a in the first direction, the end portion of a portion of the electrode stack 500 in the second direction including portions corresponding to n electrode piece 510a, 520a and 550a in the first direction, or an end portion of the n stack units 500a in the second direction may be sealed stably, uniformly, and with high quality all at once, and the bonding strength between the separator 530 and 540 and the n electrode piece 510a, 520a and 550a may be improved. As a result, with simple configuration, the quality of the electrode assembly may be improved, and manufacturing costs may be reduced.

In particular, since the tab 514, 524 and 554 of the n electrode piece 510a, 520a and 550a are positioned among (n+1) pressing portions P of the press unit 210 in the first direction, the thickness of the end portion of the electrode stack 500 in the second direction sealed by the portions between the (n+1) pressing portions P of the press unit 210 may be greater than that of the end portion of the electrode stack 500 in the second direction pressed by the (n+1) pressing portions P of the press unit 210. Therefore, when only (n+1) pressing portions P of the press unit 210 are pressed, the end portion of a portion of the electrode stack 500 in the second direction including a portion corresponding to the n electrode piece 510a, 520a and 550a in the first direction or the end portion of the n stack units 500a in the second direction may be sealed more uniformly, and the bonding strength between the separator 530 and 540 and the n electrode piece 510a, 520a and 550a may be improved.

According to an embodiment of the present invention, in the sealing step S720, the portion of the electrode stack 500 sealed by the press unit 210 after the electrode stack 500 is transported by the transport unit by the unit distance U may be in contact with or partially overlap a portion of the electrode stack 500 sealed by the press unit 210 before the electrode stack 500 may be transported by the transport unit by the unit distance U.

Accordingly, the end portion of the electrode stack 500 in the second direction may be sealed by the press unit 210 without missing portions. In particular, when the width RW of the area of the electrode stack 500 in the first direction in contact with the press unit 210 or the length L of the press unit 210 in the first direction is greater than the unit distance U, the area to be sealed may partially overlap with the area sealed by the press unit 210 immediately before each time the press unit 210 seals the end portion of the electrode stack 500 in the second direction. Therefore, it is possible to prevent the end portion of the electrode stack 500 in the second direction from being not sealed due to errors in the position and size of the electrode (piece), errors in the transport distance of the transport unit, and position errors in the press unit 210. As a result, with simple configuration, the quality of the electrode assembly may be improved.

According to an embodiment of the present invention, the sealing unit 200 may be heated in the sealing step S720.

Accordingly, the end portion of the electrode stack 500 in the second direction may be sealed stably, uniformly, and with high quality, and the bonding strength between the separator 530 and 540 and the electrode 510, 520 and 550 may be improved. Therefore, the quality of electrode assembly may be improved.

According to an embodiment of the present invention, manufacturing method S700 of electrode assembly may include a sealing step S720 wherein the first sealing unit 200a may seal one end of the electrode stack 500 in the second direction while moving toward the one side of the second direction, and the second sealing unit 200b may seal other end of the second direction of the electrode stack 500 while moving toward the other side of the second direction.

Accordingly, since the two ends of the electrode stack 500 in the second direction are sealed in the second direction, the two ends of the electrode stack 500 in the second direction may be sealed stably, uniformly, and with high quality, and the bonding strength between the separator 530 and 540 and the electrode 510, 520 and 550 may be significantly improved. This is because the width of the two ends in the second direction of the electrode stack 500 sealed by the sealing unit 200 is smaller than the width in the first direction such that sealing the electrode stack 500 in the second direction is effective. Therefore, the quality of the electrode assembly manufactured by the manufacturing method S700 thereof may be significantly improved.

In addition, since the two ends of the electrode stack 500 in the second direction are sealed from the inside to the outside of the stack unit 500a, the empty space inside the electrode stack 500 may be sealed by pushing the same to the outside of the electrode stack 500, and the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the two end portion of the electrode stack 500 in the second direction may be sealed stably, uniformly, and with high quality, and the bonding strength between the separator 530 and 540 and the electrode 510, 520 and 550 may be significantly improved. Therefore, the quality of the electrode assembly manufactured by the manufacturing method S700 thereof may be significantly improved.

In addition to the advantageous effects described above, specific effects of the present invention will be described further while describing specific details of the present invention.

### [BRIEF DESCRIPTION OF DRAWINGS]

FIG. 1 is a plan view and a side view schematically illustrating a lamination apparatus and an electrode stack according to an embodiment of the present invention.
FIGS. 2 and 3 are side views schematically illustrating the lamination apparatus and two types of the electrode stack of FIG. 1.
FIGS. 4 and 5 are cross-sectional views taken along line A-A' of FIG. 1, illustrating the lamination apparatus and two types of the electrode stacks of FIGS. 2 and 3.
FIGS. 6 and 7 are a plan view and a side view illustrating the lamination apparatus of FIGS. 1 to 5 and another type of the electrode stack.
FIG. 8 is a cross-sectional view taken along line A-A' of FIG. 6.
FIG. 9 is a diagram specifying the sealing unit of the lamination apparatus of FIGS. 1 to 8 according to an embodiment of the present invention.
FIG. 10 is a flowchart of a manufacturing method of electrode assembly according to an embodiment of the present invention.
FIGS. 11 to 14 are diagrams schematically illustrating embodiments of electrode assemblies manufactured by the manufacturing method thereof of FIG. 10.
FIG. 15 is a side view schematically illustrating a conventional lamination apparatus.

### [DESCRIPTION OF REFERENCE NUMERALS]

| | | | |
|---|---|---|---|
| 10: | lamination apparatus | | |
| 100: | lamination unit | | |
| 200: | sealing unit | 110: | electrode |
| 200a: | first sealing unit | 200b: | second sealing unit |
| 210: | press unit | 212: | upper press unit |
| 214: | lower press unit | P: | pressing portion |
| 220: | first support | 230: | second support |
| 300: | cutting unit | | |
| 500: | electrode stack | 500a: | electrode assembly |
| 510: | first electrode | 510a: | electrode piece |
| 512: | body | 514: | tab |
| 520: | second electrode | 520a: | electrode piece |
| 522: | body | 524: | tab |
| 530: | first separator | 532: | extension |
| 540: | second separator | 542: | extension |

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

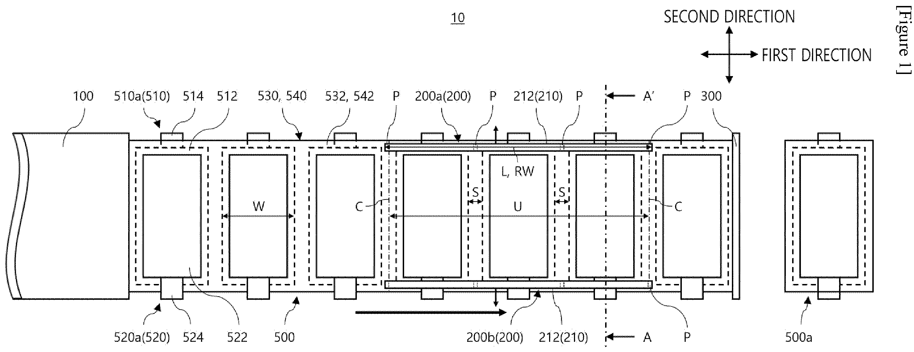

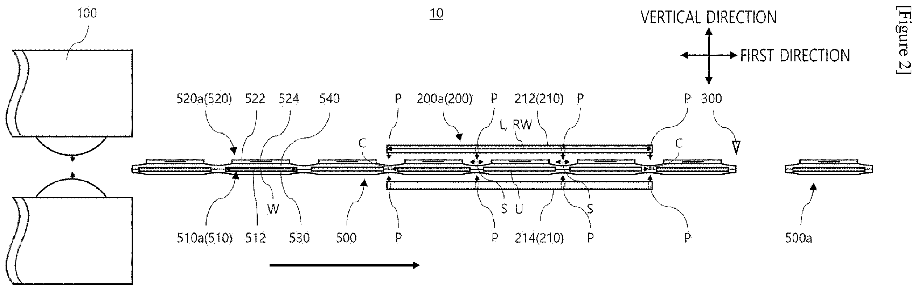

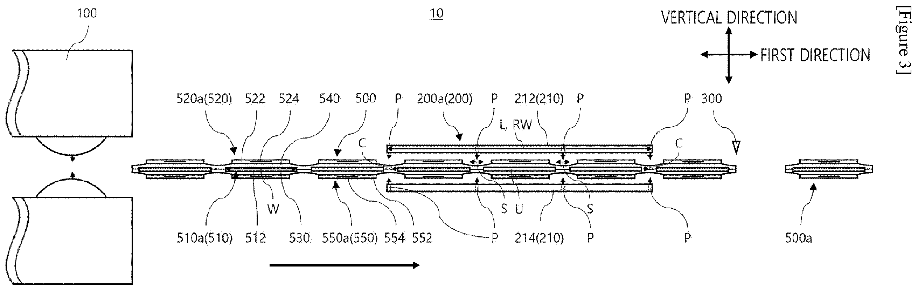

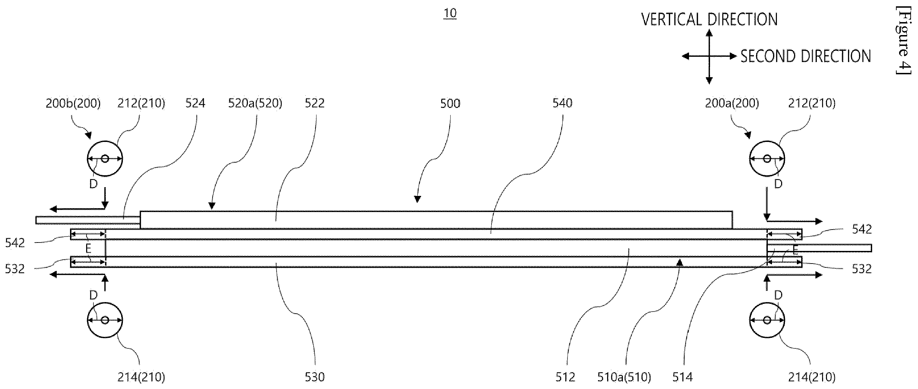

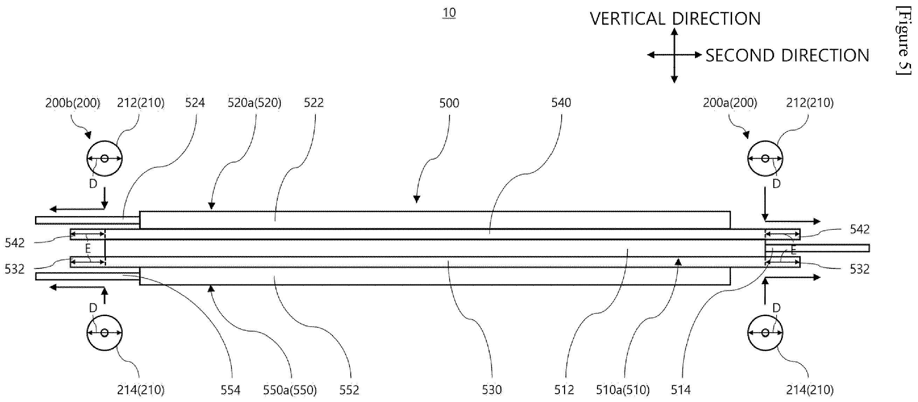

FIG. 1 is a plan view and a side view schematically illustrating a lamination apparatus and an electrode stack according to an embodiment of the present invention. FIGS. 2 and 3 are side views schematically illustrating the lamination apparatus and two types of the electrode stack of FIG. 1. FIGS. 4 and 5 are cross-sectional views taken along line A-A' of FIG. 1, illustrating the lamination apparatus and two types of the electrode stacks of FIGS. 2 and 3.

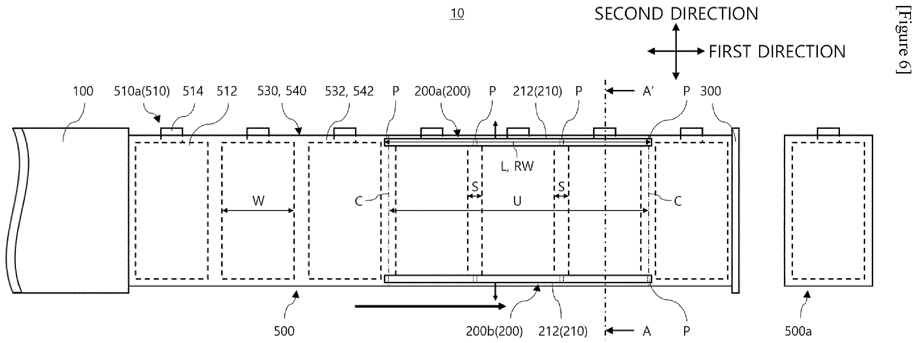

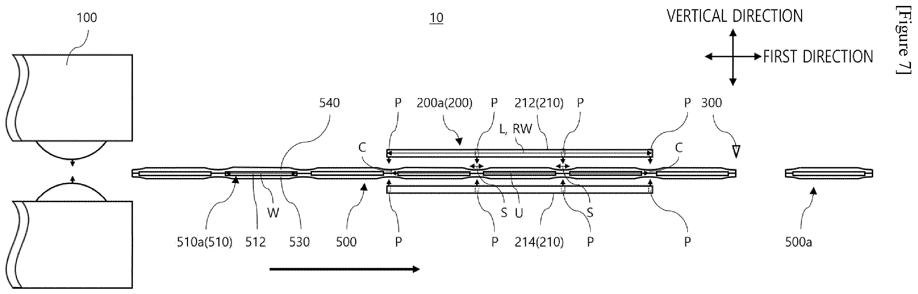

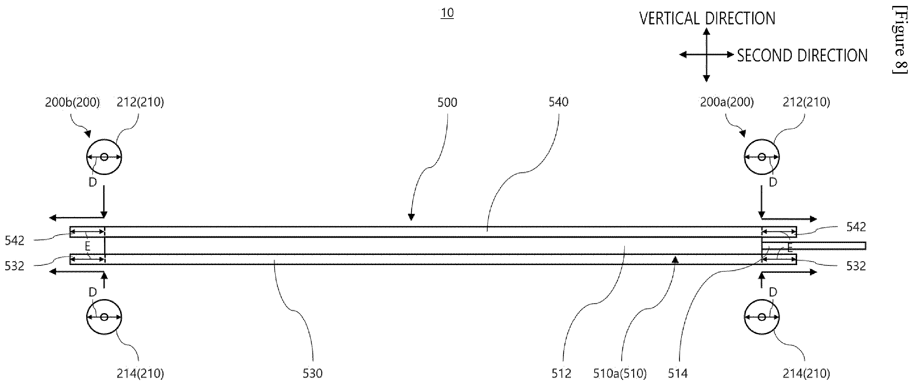

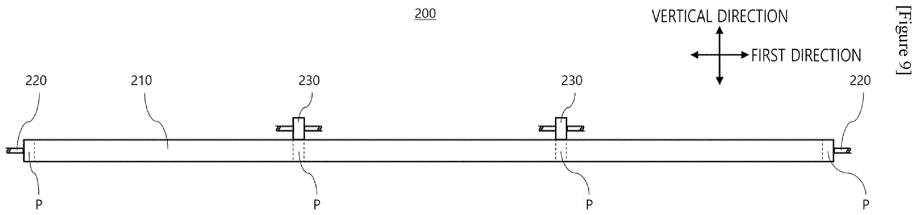

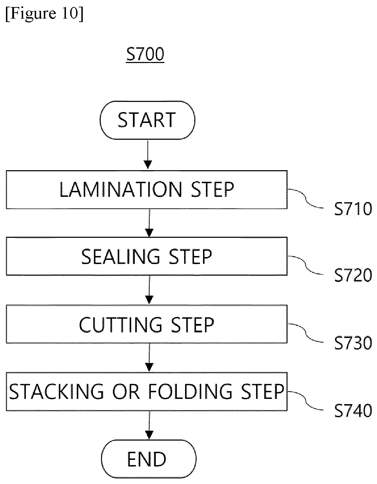

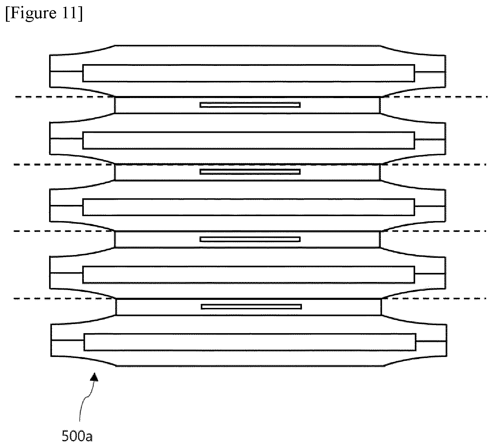

FIGS. 6 and 7 are a plan view and a side view illustrating the lamination apparatus of FIGS. 1 to 5 and another type of the electrode stack. FIG. 8 is a cross-sectional view taken along line A-A' of FIG. 6. FIG. 9 is a diagram specifying the sealing unit of the lamination apparatus of FIGS. 1 to 8 according to an embodiment of the present invention. FIG. 10 is a flowchart of a manufacturing method of electrode assembly according to an embodiment of the present invention. FIGS. 11 to 14 are diagrams schematically illustrating embodiments of electrode assemblies manufactured by the manufacturing method thereof of FIG. 10.

### [LAMINATION APPARATUS]

Referring to FIGS. 1 to 3, 6 and 7, the lamination apparatus 10 according to an embodiment of the present invention may include a transport unit (not shown) and a sealing unit 200. The lamination apparatus 10 may include a lamination unit 100. The lamination apparatus 10 may include a cutting unit 300.

The lamination apparatus 10 may bond (laminate), seal and/or cut the electrode stack 500. When the lamination apparatus 10 cuts the electrode stack 500 into stack units 500a after sealing the electrode stack 500 as shown, an electrode assembly may be manufactured by stacking the stack units 500a (FIGS. 11 to 14). On the other hand, when the lamination apparatus 10 does not cut the electrode stack 500 into stack units 500a as shown after sealing the electrode stack 500, the sealed electrode stack 500 may be folded to manufacture an electrode assembly.

Hereinafter, each element will be described.

### [ELECTRODE STACK]

Referring further to FIGS. 4, 5 and 8, the electrode stack 500 according to an embodiment the present invention may be manufactured by alternately stacking at least one electrode 510, 520 and 550 and two or more separator 530 and 540 in the vertical direction.

Specifically, for example, the electrode stack 500 may be manufactured by: sequentially stacking a first separator 530, a first electrode 510 (e.g., a negative electrode ), a second separator 540 and a second electrode 520 (e.g., a positive electrode) as shown in FIG. 4; sequentially stacking third electrode 550 (e.g., a positive electrode), a first separator 530, a first electrode 510 (e.g., a negative electrode ), a second separator 540 and a second electrode 520 (e.g., a positive electrode) as shown in FIG. 5; or sequentially stacking a first separator 530, a first electrode 510 (e.g., negative electrode ) and a second separator 540 as shown in FIG. 8. As a result, the unit electrode stack 500a manufactured by cutting the electrode stack 500 by the lamination apparatus 10 may be: a mono cell (FIGS. 2 and 4) in which different types of electrode are located at the two sides of the stacking direction (vertical direction); a bicell (FIGS. 3 and 5) in which the same type of electrode are located at two sides of the stacking direction (vertical direction); or a half cell (FIGS. 7 and 8) in which one electrode is interposed between two separator.

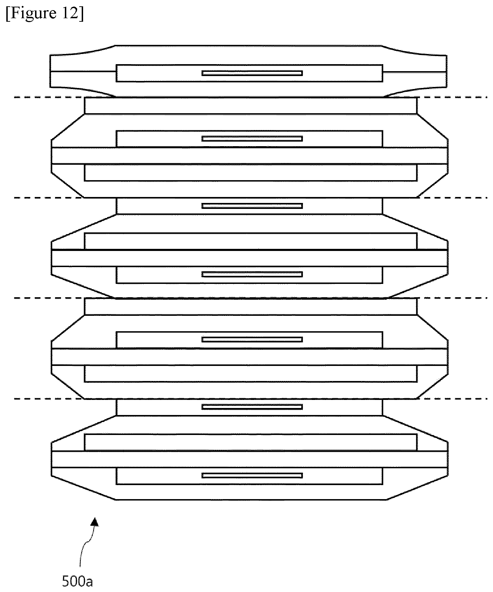

However, the present invention is not limited to such configuration. As another example, unlike FIGS. 2 to 5, the number of electrode and separator alternately stacked in the vertical direction in FIGS. 2 to 5 may increase by n (n is a natural number equal to or greater than 1). Additionally, unlike FIG. 5, one more separator may be stacked on the upper end or lower end of unit laminate shown in FIG. 5 (stack unit 500a shown in FIG. 12).

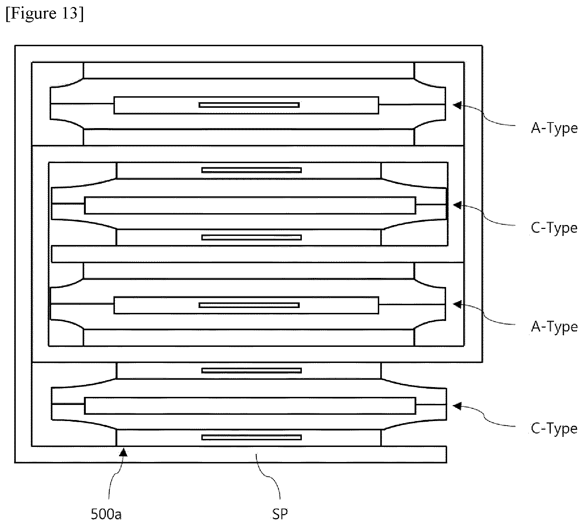

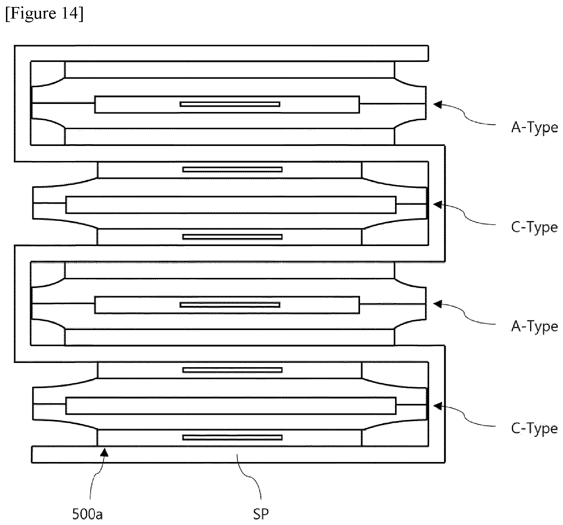

Additionally, the types (+, -) of electrode in FIGS. 1 to 8 may be interchanged (stack unit 500a of FIGS. 11 to 14). Specifically, for example, as shown in FIGS. 3 and 5, the electrode stack 500 may have a structure of positive electrode-separator-negative electrode -separator-positive electrode stacked therein, which is an A-type bicell (stack unit 500a). Alternatively, unlike FIGS. 3 and 5, the electrode stack 500 may have a structure of negative electrode - separator-positive electrode-separator-negative electrode stacked therein, which is a C-type bicell (stack unit 500a) (FIGS. 13 and 14).

Additionally, unlike shown in the drawings, the electrode types (+, -) of the electrode piece 510a, 520a and 550a arranged side by side in the first direction in the electrode stack 500 may not be the same. Accordingly, unlike in the drawing, when the sealed electrode stack 500 is folded, different types of electrode may face each other vertically.

The electrode 510, 520 and 550 may extend in the first direction (e.g., forward and reverse directions) intersecting the vertical direction and in the second direction (e.g., left and right directions) intersecting the vertical direction and the first direction. The electrode (510, 520, 550) may include body (512, 522, 552) and tab (514, 524, 554).

Specifically, for example, the electrode 510, 520 and 550 may include a plurality of electrode piece 510a, 520a and 550a. The electrode piece 510a, 520a and 550a may be arranged on the separator 530 and 540 side by side and spaced apart from one another by a predetermined distance in the first direction. Each electrode piece 510a, 520a and 550a may include the body 512, 522 and 552, and the tab 514, 524 and 554 described above.

The body (512, 522, 552) may be the center portions of the electrode (510, 520, 550) or the electrode piece (510a, 520a, 550a).

The tab (514, 524, 554) may protrude from the body (512, 522, 552) of the electrode (510, 520, 550) or the electrode piece (510a, 520a, 550a) in a direction intersecting the vertical direction. For example, the tab (514, 524, 554) may protrude from the body (512, 522, 552) of electrode (510, 520, 550) or each electrode piece (510a, 520a, 550a) toward the one side (e.g., right) or the other side (e.g., left) of the second direction.

However, the present invention is not limited to such configuration. That is, unlike shown in the drawings, the electrode (510, 520, 550) may be arranged long along the first direction without being cut into a plurality of electrode piece (510a, 520a, 550a).

The separator 530 and 540 may be extended in the first and the second directions. The separator 530 and 540 may be extended further in the first direction. The separator (530, 540) may include extensions (532, 542).

The extensions (532, 542) may extend further toward the one side (e.g., right) or the other side (e.g., left) of the second direction than the body (512, 522, 552) of the electrode (510, 520, 550) or each electrode piece (510a, 520a, 550a) (FIGS. 4, 5 and 8). For example, the extensions (532, 542) may extend further toward the one side or the other side of the second direction than the first electrode 510 or the body 512 of the electrode piece 510a of the first electrode 510 or the electrode piece 510a of the first electrode 510 which protrudes further toward the one side or the other side of the second direction than the body 522 of the electrode piece 520a of the second electrode 520 (FIG. 4). The extensions (532, 542) may face or be in contact with the tab (514, 524, 554) in the vertical direction (FIGS. 4, 5 and 8).

### [TRANSPORT UNIT]

The transport unit (not shown) may transport, in the first direction (e.g., forward and reverse directions) intersecting the vertical direction, the electrode stack 500. For example, the transport unit may include a conveyor belt that transports goods in the first direction, and an electrode stack 500 may be placed on this conveyor belt.

The transport unit may transport the electrode stack 500 by unit distance U in the first direction. Here, the unit distance U may be the distance that is the sum of the widths of n (e.g., 3) stack units 500a in the first direction.

Meanwhile, the transport unit is not an essential element and may be omitted.

### [LAMINATION UNIT]

The lamination unit (100) may press and bond the electrode stack (500) transported by the transport unit. The lamination unit (100) may at least partially press and bond a center portion of the electrode stack (500) in the second direction. For example, the lamination unit (100) may bond the plurality of electrode piece (510a, 520a, 550a) and the separator (530, 540) vertically.

**In** addition, as shown in FIGS. 2, 3 and 7, the lamination unit 100 may at least partially bond/seal in vertical direction portions of a first separator 530 and a second separator 540 in the first direction corresponding to a section in the first direction between a pair of electrode piece 510a adjacent to each other in the first direction. However, the lamination unit 100 is not limited to such configuration.

The lamination unit 100 may include a roller (FIGS. 2, 3 and 7). The rollers may be heated.

Meanwhile, the lamination unit 100 is not an essential element and may be omitted.

### [SEALING UNIT]

The sealing unit 200 may seal the electrode stack 500. For example, the sealing unit (200) may seal the electrode stack (500) transported by the transport unit. The sealing unit (200) may seal an end portion of the electrode stack (500) in the second direction while moving toward one side or other side of the second direction (e.g. left and right directions) intersecting the vertical direction and the first direction (FIGS. 1, 4, 5 and 8). Specifically, the sealing unit (200) may seal a portion of the end portion of the electrode stack (500) in the second direction that comprises a portion overlapping in the first direction with end portion of the electrode (510, 520, 550) in the second direction while moving toward one side or other side of the second direction.

Accordingly, the end portion of the electrode stack 500 in the second direction is sealed in the second direction that intersects the transporting direction (first direction) of the electrode stack 500 such that the end portion of the electrode stack 500 in the second direction is stably and uniformly sealed with high quality, and the bonding strength between the separator 530 and 540 and the electrode 510, 520 and 550 may be significantly improved. This is because the width of the end portion of the electrode stack 500 in the second direction that the sealing unit 200 seals is smaller than the width in the first direction such that sealing in the second direction is effective. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

Specifically, for example, in the end portion of the electrode stack 500 in the second direction, the separator 530 and 540 extending further in the second direction than the body 512, 522 and 552 of the electrode 510, 520 and 550 may be stably and uniformly bonded and sealed in vertical direction, and the separator 530 and 540 may be stably and uniformly bonded to the end portion of the electrode 510, 520 and 550 in the second direction.

The sealing unit 200 may move in the vertical direction to seal the electrode stack 500 while pressing the same in the vertical direction (FIGS. 2 to 5, 7 and 8).

The sealing unit (200) may seal the end portion of the electrode stack (500) in the second direction while moving toward the one side or the other side of the second direction and moving from inside to outside of the electrode stack (500).

Accordingly, the empty space inside the electrode stack 500 may be sealed by pushing the same to the outside of the electrode stack 500. In addition, the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the end portion of the electrode stack 500 in the second direction may be sealed stably, uniformly, and with high quality, and the bonding strength between the separator 530 and 540 and the electrode 510, 520 and 550 may be significantly improved. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

The sealing unit (200) may seal the electrode stack (500) with the center portion in the second direction at least partially bonded by the lamination unit (100).

Accordingly, since the sealing unit 200 seals the end portion in the second direction of the electrode stack 500 having at least portion of the center portion thereof in the second direction bonded by the lamination unit 100, the end portion of the electrode stack 500 in the second direction may be sealed stably, uniformly, and with high quality, and the bonding strength between the separator 530 and 540 and the electrode 510, 520 and 550 may be improved. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

As described above, when the tab (514, 524, 554) of the electrode (510, 520, 550) protrude from the body (512, 522, 552) toward the one side or the other side of the second direction, and the extensions (532, 542) of the separator (530, 540) extend further toward the one side or the other side of the second direction than the body (512, 522, 552) of the electrode (510, 520, 550) and face or are in contact with the tab (514, 524, 554) in the vertical direction, the end portion of the electrode stack (500) in the second direction sealed by the sealing unit (200) may include at least a portion of the extensions (532, 542).

Accordingly, the end portion of the electrode stack 500 in the second direction, where the tab 514, 524 and 554 of the electrode 510, 520 and 550 are located, may be sealed stably, uniformly, and with high quality, and the bonding strength between the separator 530 and 540 and the electrode 510, 520 and 550 may be significantly improved. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

The sealing unit 200 may include a press unit 210.

The press unit 210 may contact the electrode stack 500. The press unit 210 may move toward the one side or the other side of the second direction while pressing the electrode stack 500.

The press unit 210 may include at least one of an upper press unit 212 and a lower press unit 214 (FIGS. 2 to 5, 7 and 8).

The upper press unit 212 may be disposed above the electrode stack 500 and move toward the one side or the other side of the second direction while pressing the electrode stack 500 downward.

The lower press unit 214 may be disposed at a lower portion of the electrode stack 500 and move toward the one side or the other side of the second direction while pressing the electrode stack 500 upward.

The press unit (210), the upper press unit (212) and lower press unit (214) may be rollers.

Accordingly, since the press unit 210 is a roller, the friction force between the press unit 210 and the electrode stack 500 is reduced when the press unit 210 seals the end portion of the electrode stack 500 in the second direction while moving to one side or the other side of the second direction such that a large force is not applied to the electrode stack 500 in the second direction. As a result, separate equipment for fixing the electrode stack 500 in the second direction is not necessary, or the electrode stack 500 may be quickly and easily fixed in the second direction with simple equipment. In addition, since the press unit 210 is a roller, the end portion of the electrode stack 500 in the second direction may be sealed stably, uniformly, quickly and with high quality, and the bonding strength between the separator 530 and 540 and the electrode 510, 520 and 550 may be improved. Therefore, with a simple configuration, the quality of the stack unit 500a, the quality of the electrode assembly with stacked stack units 500a or the quality of the electrode assembly manufactured by folding of the electrode stack 500 may be significantly improved and manufacturing time may be shortened to reduce manufacturing costs.

The press unit 210 may include the upper press unit 212 and the lower press unit 214.

Accordingly, since the press unit 210 (roller) includes two rollers of the upper and lower portions, the friction force between the press unit 210 and the electrode stack 500 is further reduced such that separate equipment for fixing the electrode stack 500 in the second direction is not necessary, or the electrode stack 500 may be quickly and easily fixed in the second direction with simple equipment. In addition, the end portion of the electrode stack 500 in the second direction may be may be sealed more stably, uniformly, quickly and with high quality, and the bonding strength between the separator 530 and 540 and the electrode 510, 520 and 550 may be improved. Therefore, with a simple configuration, the quality of the stack unit 500a, the quality of the electrode assembly with stacked stack units 500a or the quality of the electrode assembly manufactured by folding of the electrode stack 500 may be significantly improved and manufacturing time may be shortened to reduce manufacturing costs.

As described above, when the tab (514, 524, 554) of the electrode (510, 520, 550) may protrude from the body (512, 522, 552) in a direction intersecting the vertical direction, the extensions (532, 542) of the separator (530, 540) may extend further than the body (512, 522, 552) of the electrode (510, 520, 550), in the second direction, and the end portion of the electrode stack (500) in the second direction sealed by the sealing unit (200) may include at least a portion of extensions (532, 542), the diameter (D) of the press unit (210) may be 0.5to 5 times the width (E) of the extensions (532, 542) in the second direction (FIG. 3).

Accordingly, since the diameter D of the press unit 210 (roller) is small, the position, moving direction, pressing force, or temperature of the press unit 210 and the like may be controlled in detail and accurately such that the end portion of the electrode stack 500 in the second direction including at least a portion of the extension 532 and 542 may be sealed stably, uniformly, and with high quality, and the bonding strength between the separator 530 and 540 and the electrode 510, 520 and 550 may be improved even when the width E of the extension 532 and 542 in the second direction is small. Therefore, the quality of the stack unit 500a manufactured by the lamination apparatus 10, the quality of the electrode assembly with stacked stack units 500a or the quality of the electrode assembly manufactured by folding of the electrode stack 500 may be significantly improved.

The length L of the press unit 210 in the first direction may be greater than the width W in the first direction of the body 512, 522 and 552 of each electrode piece 510a, 520a and 550a. In addition, the press unit 210 may be arranged to completely overlap in the first direction with the body 512, 522 and 552 of n electrode piece 510a, 520a and 550a (where n may be a natural number equal to or greater than 1, e.g. n=3) arranged consecutively when the electrode stack 500 is transported by the transport unit (FIGS. 1 and 2).

Here, as described above, the tab 514, 524 and 554 of each electrode piece 510a, 520a and 550a, respectively, may protrude from the body 512, 522 and 552 in a direction intersecting the vertical direction, the extensions 532 and 542 of the separator 530 and 540 may extend further than the body 512, 522 and 552 of the electrode piece 510a, 520a and 550a in the second direction, and the end portion of the electrode stack (500) in the second direction sealed by the sealing unit (200) may include at least a portion of extensions 532 and 542.

Accordingly, when the electrode stack 500 is transported by the transport unit, the extensions 532 and 542 located at one side or the other side of the second direction of the n electrode piece 510a, 520a and 550a may be uniformly sealed at once as the press unit 210 moves toward one side or the other side of the second direction while pressing the end portion of the electrode stack 500 in the second direction, and the bonding strength between the separator 530 and 540 and the n electrode piece 510a, 520a and 550a may be improved. As a result, the end portions of the stack unit 500a in the second direction can be sealed uniformly, quickly, and at low cost, and the bonding strength between the separators 530 and 540 and the electrodes 510, 520, and 550 may be improved. Therefore, with a simple configuration, the quality of the stack unit 500a, the quality of the electrode assembly with stacked stack units 500a or the quality of the electrode assembly manufactured by folding of the electrode stack 500 may be significantly improved and manufacturing time may be shortened to reduce manufacturing costs.

When the press unit 210 is a roller, the press unit 210 may include (n+1) pressing portions P (e.g. 4 pressing portions P).

The (n+1) pressing portions P may be pressed toward the electrode stack 500 when sealing the one end or the other end of the electrode stack 500 in the second direction. The (n+1) pressing portions P may be spaced apart from one another in the first direction.

The (n+1) pressing portions P may be two ends of the press unit 210 in the first direction and (n-1) portions of the press unit 210 in the first direction at least partially overlapping with or adjacent to (n-1) sections S between the n electrode piece 510a, 520a and 550a in the first direction, respectively.

The tab 514, 524 and 554 of the n electrode piece 510a, 520a and 550a may be located between the (n+1) pressing portions P in the first direction.

Here, as described above, the tab 514, 524 and 554 of the electrode piece 510a, 520a and 550a protrude from the body 512, 522 and 552 toward the one side or the other side of the second direction, and the extensions 532 and 542 of the separator 530 and 540 extends further toward the one side or the other side of the second direction than the body 512, 522 and 552 of the electrode piece 510a, 520a and 550a and face or are in contact with the tab 514, 524 and 554 in the vertical direction.

Accordingly, when pressing and sealing the end portion of the stack unit 500a in the second direction with the press unit 210, which is a roller, it is not necessary to press the entire press unit 210, but only (n+1) pressing portions P including the two ends of the press unit 210 in the first direction, the press unit 210 and sealing unit 200 may be easily constructed at low cost with a simple configuration. Therefore, the manufacturing cost of the stack unit 500a may be reduced.

In addition, since the width of each electrode piece 510a, 520a and 550a in the first direction is small, even when only the two ends of the press unit 210 in the first direction and the (n-1) portions of the press unit 210 are pressed, wherein the (n-1) portions of the press unit 210 overlap at least partially with or adjacent to the (n-1) sections S in the first direction between the n electrode piece 510a, 520a and 550a in the first direction, the end portion of a portion of the electrode stack 500 in the second direction including portions corresponding to n electrode piece 510a, 520a and 550a in the first direction, or an end portion of the n stack units 500a in the second direction may be sealed stably, uniformly, and with high quality all at once, and the bonding strength between the separator 530 and 540 and the n electrode piece 510a, 520a and 550a may be improved. As a result, with simple configuration, the quality of the stack unit 500a, the quality of the electrode assembly with stacked stack units 500a or the quality of the electrode assembly manufactured by folding of the electrode stack 500 may be improved and manufacturing costs may be reduced.

In particular, since the tab 514, 524 and 554 of the n electrode piece 510a, 520a and 550a are positioned among (n+1) pressing portions P of the press unit 210 in the first direction, the thickness of the end portion of the electrode stack 500 in the second direction sealed by the portions between the (n+1) pressing portions P of the press unit 210 may be greater than that of the end portion of the electrode stack 500 in the second direction pressed by the (n+1) pressing portions P of the press unit 210. Therefore, when only (n+1) pressing portions P of the press unit 210 are pressed, the end portion of a portion of the electrode stack 500 in the second direction including a portion corresponding to the n electrode piece 510a, 520a and 550a in the first direction or the end portion of the n stack units 500a in the second direction may be sealed more uniformly, and the bonding strength between the separator 530 and 540 and the n electrode piece 510a, 520a and 550a may be further improved.

In this regard, further referring to FIG. 9, the sealing unit 200 according to an embodiment may include a press unit 210, a first support 220 and a second support 230.

The press unit 210 may be a roller as described above.

The first support 220 may be a rotation shaft of the press unit 210 supporting the press unit 210, which is a roller. The first support 220 may vertically press the two pressing portions P, which are the two ends of the press unit 210 in the first direction among the (n+1) (e.g., 4) pressing portions P described above.

The second support 230 may be a roller in contact with the press unit 210. The number of (n-1) second supports 230 (e.g., 2) may be provided. The (n-1) second supports 230 may vertically press (n-1) portions of the press unit 210 in the first direction at least partially overlapping with or adjacent to (n-1) sections S between the n electrode piece 510a, 520a and 550a in the first direction among the above-described (n+1) (e.g., 4) pressing portions P (FIGS. 1 to 3, 6 and 7).

Accordingly, the (n+1) pressing portions P described above may be provided in the press unit 210 with a simple configuration and at low cost.

Meanwhile, as described above, when the transport unit transports the electrode stack 500 by unit distance U in the first direction, the press unit 210 may seal a portion of the electrode stack 500 in contact with the press unit 210 each time the electrode stack 500 may be transported by the unit distance U. The width RW of the portion in the first direction or the length L of the press unit 210 in the first direction may be equal to or greater than the unit distance U (FIGS. 1 to 3, 6 and 7).

Accordingly, the end portion of the electrode stack 500 in the second direction may be sealed by the press unit 210 without missing portions. In particular, when the width RW of the area of the electrode stack 500 in the first direction in contact with the press unit 210 or the length L of the press unit 210 in the first direction is greater than the unit distance U, the area to be sealed may partially overlap with the area sealed by the press unit 210 immediately before each time the press unit 210 seals the end portion of the electrode stack 500 in the second direction. Therefore, it is possible to prevent the end portion of the electrode stack 500 in the second direction from being not sealed due to errors in the position and size of the electrode (piece), errors in the transport distance of the transport unit, and position errors in the press unit 210. As a result, with simple configuration, the quality of the stack unit 500a, the quality of the electrode assembly with stacked stack units 500a or the quality of the electrode assembly manufactured by folding of the electrode stack 500 may be improved.

The sealing unit 200 may be heated. For example, a heating wire may be embedded into the press unit 210, or the press unit 210 may be heated by heating the supports (220 and 230, FIG. 4) that support the press unit 210 while being in contact with the press unit 210.

Accordingly, the end portion of the electrode stack 500 in the second direction may be sealed stably, uniformly, and with high quality, and the bonding strength between the separator 530 and 540 and the electrode 510, 520 and 550 may be improved. Therefore, the quality of the stack unit 500a, the quality of the electrode assembly with stacked stack units 500a or the quality of the electrode assembly manufactured by folding of the electrode stack 500 may be improved.

Meanwhile, the sealing unit 200 may include a first sealing unit 200a and a second sealing unit 200b.

The first sealing unit 200a may seal one end portion (e.g. right) of the electrode stack 500 in the second direction while moving toward the one side (e.g. right) of the second direction. Specifically, the first sealing unit 200a may seal a portion of the one end portion of the electrode stack (500) in the second direction that comprises a portion overlapping in a first direction with one end portion of the electrode (510, 520, 550) in the second direction while moving toward the one side of the second direction.

The second sealing unit 200b may seal the other end portion (e.g. left) of the electrode stack 500 in the second direction while moving toward the other side (e.g. left) of the second direction. Specifically, the second sealing unit 200b may seal a portion of the other end portion of the electrode stack (500) in the second direction that comprises a portion overlapping in the first direction with the other end portion of the electrode (510, 520, 550) in the second direction while moving toward other side of the second direction.

Accordingly, since the two ends of the electrode stack 500 in the second direction are sealed in the second direction, the two ends of the electrode stack 500 in the second direction may be sealed stably, uniformly, and with high quality, and the bonding strength between the separator 530 and 540 and the electrode 510, 520 and 550 may be significantly improved. This is because the width of the two ends in the second direction of the electrode stack 500 sealed by the sealing unit 200 is smaller than the width in the first direction such that sealing in the second direction is effective. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

Specifically, for example, at the two ends of the second direction of the electrode stack 500, the separator 530 and 540 extending further than the bodies 512, 522 and 552 of the electrodes 510, 520 and 550 toward the two sides of the second direction may be stably and uniformly bonded and sealed in vertical direction, and the separator 530 and 540 may be stably and uniformly bonded to the two ends of the electrode 510, 520 and 550 in the second direction.

In addition, since the two ends of the electrode stack 500 in the second direction are sealed from the inside to the outside of the stack unit 500a, the empty space inside the electrode stack 500 may be sealed by pushing the same to the outside of the electrode stack 500, and the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the two end portion of the electrode stack 500 in the second direction may be sealed stably, uniformly, and with high quality, and the bonding strength between the separator 530 and 540 and the electrode 510, 520 and 550 may be significantly improved. Therefore, the quality of the stack unit 500a manufactured by the lamination apparatus 10, the quality of the electrode assembly with stacked stack units 500a or the quality of the electrode assembly manufactured by folding of the electrode stack 500 sealed by the lamination apparatus 10 may be significantly improved.

### [CUTTING UNIT]

The cutting unit 300 may cut the electrode stack 500 having the end portion in the second direction sealed by the sealing unit 200. For example, the cutting unit 300 may cut the electrode stack 500 into a size unit of stack unit 500a as shown. Specifically, the cutting unit 300 may cut the area between the electrode piece 510a, 520a and 550a of the electrode stack 500. For example, the cutting unit 300 may cut along the cutting line C extending in the second direction (FIGS. 1 to 3, 6 and 7). Accordingly, stack unit 500a may be manufactured.

On the other hand, unlike shown in the drawings, the cutting unit 300 may cut the electrode stack 500 into multiple size units of stack units 500a, which will be described later.

Meanwhile, the cutting unit 300 is not an essential element and may be omitted.

### [MANUFACTURING METHOD OF ELECTRODE ASSEMBLY]

Referring to FIG. 10, the manufacturing method S700 of electrode assembly according to an embodiment of the present invention may include a lamination step S710, a sealing step S720, a cutting step S730 and a stacking step S740. The lamination step S710 and/or the cutting step S730 may be omitted.

### [LAMINATION STEP]

In the lamination step S710, the lamination unit 100 may at least partially press and bond a center portion of the electrode stack 500 in the second direction transported by the transport unit. For example, the lamination unit 100 may bond the plurality of electrode piece 510a, 520a and 550a and the separator 530 and 540 vertically.

In addition, as shown in FIG. 2, the lamination unit 100 may at least partially bond/seal in vertical direction portions of a first separator 530 and a second separator 540 in the first direction corresponding to a section in the first direction between a pair of electrode piece 510a adjacent to each other in the first direction. However, the lamination unit 100 is not limited to such configuration.

### [SEALING STEP]

**In** the sealing step S720, the sealing unit 200 may seal the electrode stack (500) transported by the transport unit, and seal the end portion of an electrode stack 500 in a second direction while moving toward the one side or the other side of a second direction.

Accordingly, the end portion of the electrode stack 500 in the second direction is sealed in the second direction that intersects the transporting direction (first direction) of the electrode stack 500 such that the end portion of the electrode stack 500 in the second direction is stably and uniformly sealed with high quality, and the bonding strength between the separator 530 and 540 and the electrode 510, 520 and 550 may be significantly improved. This is because the width of the end portion of the electrode stack 500 in the second direction that the sealing unit 200 seals is smaller than the width in the first direction such that sealing in the second direction is effective. Therefore, the quality of the electrode assembly manufactured by the manufacturing method S700 thereof may be significantly improved.

Specifically, for example, in the end portion of the electrode stack 500 in the second direction, the separator 530 and 540 extending further in the second direction than the body 512, 522 and 552 of the electrode 510, 520 and 550 may be stably and uniformly bonded and sealed in vertical direction, and the separator 530 and 540 may be stably and uniformly bonded to the end portion of the electrode 510, 520 and 550 in the second direction.

In addition, the sealing unit 200 may move toward the one side or the other side of the second direction, and seal the end portion of the electrode stack 500 in the second direction while moving from inside to outside of the electrode stack 500.

Accordingly, the empty space inside the electrode stack 500 may be sealed by pushing the same to the outside of the electrode stack 500. In addition, the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the end portion of the electrode stack 500 in the second direction may be sealed stably, uniformly, and with high quality, and the bonding strength between the separator 530 and 540 and the electrode 510, 520 and 550 may be significantly improved. Therefore, the quality of the electrode assembly manufactured by the manufacturing method S700 thereof may be significantly improved.

In addition, the upper press unit 212, which is a roller, may move toward the one side or the other side of the second direction while pressing the electrode stack 500 downward, or the lower press unit 214, which is a roller, may move to the one side or the other side of the second direction while pressing the electrode stack 500 upward.

Accordingly, since the press unit 210 is a roller, the friction force between the press unit 210 and the electrode stack 500 is reduced when the press unit 210 seals the end portion of the electrode stack 500 in the second direction while moving to one side or the other side of the second direction such that a large force is not applied to the electrode stack 500 in the second direction. As a result, separate equipment for fixing the electrode stack 500 in the second direction is not necessary, or the electrode stack 500 may be quickly and easily fixed in the second direction with simple equipment. In addition, since the press unit 210 is a roller, the end portion of the electrode stack 500 in the second direction may be sealed stably, uniformly, quickly and with high quality, and the bonding strength between the separator 530 and 540 and the electrode 510, 520 and 550 may be improved. Therefore, with simple configuration, the quality of the electrode assembly may be improved, manufacturing time may be shortened, and manufacturing costs may be reduced.

In addition, the press unit 210 may seal an end portion of the electrode stack 500 in the second direction, and seal an end portion of the electrode stack 500 in the second direction including entirety of sections in the first direction corresponding to the n electrode piece 510a, 520a and 550a consecutively arranged in the first direction.

Accordingly, when the electrode stack 500 is transported by the transport unit, the extensions 532 and 542 located at one side or the other side of the second direction of the n electrode piece 510a, 520a and 550a may be uniformly sealed at once as the press unit 210 moves toward one side or the other side of the second direction while pressing the end portion of the electrode stack 500 in the second direction, and the bonding strength between the separator 530 and 540 and the n electrode piece 510a, 520a and 550a may be improved. As a result, the end portions of the stack unit 500a in the second direction can be sealed uniformly, quickly, and at low cost, and the bonding strength between the separators 530 and 540 and the electrodes 510, 520, and 550 may be improved. Therefore, with simple configuration, the quality of the electrode assembly may be improved, manufacturing time may be shortened, and manufacturing costs may be reduced.

In addition, the (n+1) pressing portions P of the press unit 210 may be pressed toward the electrode stack 500.

Accordingly, when pressing and sealing the end portion of the stack unit 500a in the second direction with the press unit 210, which is a roller, it is not necessary to press the entire press unit 210, but only (n+1) pressing portions P including the two ends of the press unit 210 in the first direction, the press unit 210 and sealing unit 200 may be easily constructed at low cost with a simple configuration. Therefore, the manufacturing cost of the stack unit 500a may be reduced.

In addition, since the width of each electrode piece 510a, 520a and 550a in the first direction is small, even when only the two ends of the press unit 210 in the first direction and the (n-1) portions of the press unit 210 are pressed, wherein the (n-1) portions of the press unit 210 overlap at least partially with or adjacent to the (n-1) sections S in the first direction between the n electrode piece 510a, 520a and 550a in the first direction, the end portion of a portion of the electrode stack 500 in the second direction including portions corresponding to n electrode piece 510a, 520a and 550a in the first direction, or an end portion of the n stack units 500a in the second direction may be sealed stably, uniformly, and with high quality all at once, and the bonding strength between the separator 530 and 540 and the n electrode piece 510a, 520a and 550a may be improved. As a result, with simple configuration, the quality of the electrode assembly may be improved, and manufacturing costs may be reduced.

In particular, since the tab 514, 524 and 554 of the n electrode piece 510a, 520a and 550a are positioned among (n+1) pressing portions P of the press unit 210 in the first direction, the thickness of the end portion of the electrode stack 500 in the second direction sealed by the portions between the (n+1) pressing portions P of the press unit 210 may be greater than that of the end portion of the electrode stack 500 in the second direction pressed by the (n+1) pressing portions P of the press unit 210. Therefore, when only (n+1) pressing portions P of the press unit 210 are pressed, the end portion of a portion of the electrode stack 500 in the second direction including a portion corresponding to the n electrode piece 510a, 520a and 550a in the first direction or the end portion of the n stack units 500a in the second direction may be sealed more uniformly, and the bonding strength between the separator 530 and 540 and the n electrode piece 510a, 520a and 550a may be further improved.

In addition, the portion of the electrode stack 500 sealed by the press unit 210 after the electrode stack 500 is transported by the transport unit by the unit distance U may be in contact with or partially overlap a portion of the electrode stack 500 sealed by the press unit 210 before the electrode stack 500 may be transported by the transport unit by the unit distance U.

Accordingly, the end portion of the electrode stack 500 in the second direction may be sealed by the press unit 210 without missing portions. In particular, when the width RW of the area of the electrode stack 500 in the first direction in contact with the press unit 210 or the length L of the press unit 210 in the first direction is greater than the unit distance U, the area to be sealed may partially overlap with the area sealed by the press unit 210 immediately before each time the press unit 210 seals the end portion of the electrode stack 500 in the second direction. Therefore, it is possible to prevent the end portion of the electrode stack 500 in the second direction from being not sealed due to errors in the position and size of the electrode (piece), errors in the transport distance of the transport unit, and position errors in the press unit 210. As a result, with simple configuration, the quality of the electrode assembly may be improved.

In addition, the sealing unit 200 may be heated.

Accordingly, the end portion of the electrode stack 500 in the second direction may be sealed stably, uniformly, and with high quality, and the bonding strength between the separator 530 and 540 and the electrode 510, 520 and 550 may be improved. Therefore, the quality of electrode assembly may be improved.

In addition, the first sealing unit 200a may seal one end portion of the electrode stack 500 in the second direction while moving toward the one side of the second direction, and the second sealing unit 200b may seal the other end portion of the electrode stack 500 in the second direction while moving toward the other side of the second direction.

Accordingly, since the two ends of the electrode stack 500 in the second direction of sealed in the second direction, the two ends of the electrode stack 500 in the second direction may be sealed stably, uniformly, and with high quality, and the bonding strength between the separator 530 and 540 and the electrode 510, 520 and 550 may be significantly improved. This is because the width of the two ends in the second direction of the electrode stack 500 sealed by the sealing unit 200 is smaller than the width in the first direction such that sealing in the second direction is effective. Therefore, the quality of the electrode assembly manufactured by the manufacturing method S700 thereof may be significantly improved.

Specifically, for example, at the two ends of the second direction of the electrode stack 500, the separator 530 and 540 extending further than the bodies 512, 522 and 552 of the electrodes 510, 520 and 550 toward the two sides of the second direction may be stably and uniformly bonded and sealed in vertical direction, and the separator 530 and 540 may be stably and uniformly bonded to the two ends of the electrode 510, 520 and 550 in the second direction.

In addition, since the two ends of the electrode stack 500 in the second direction are sealed from the inside to the outside of the stack unit 500a, the empty space inside the electrode stack 500 may be sealed by pushing the same to the outside of the electrode stack 500, and the empty space may be sealed by pushing from the inside of the electrode stack 500 which is thick when compressed due to the electrode 510, 520 and 550 and the separator 530 and 540 arranged vertically toward the outside of the electrode stack 500 which is thin when compressed as only the separator 530 and 540 are arranged. As a result, the two end portion of the electrode stack 500 in the second direction may be sealed stably, uniformly, and with high quality, and the bonding strength between the separator 530 and 540 and the electrode 510, 520 and 550 may be significantly improved. Therefore, the quality of the electrode assembly manufactured by the manufacturing method S700 thereof may be significantly improved.

Meanwhile, the lamination step S710 may be performed before the sealing step S720.

Accordingly, since the sealing step S720 of sealing the end portion of the electrode stack 500 in the second direction is performed after the lamination step S710 of at least partially bonding the center portion of the electrode stack 500 in the second direction, the end portion of the electrode stack 500 in the second direction may be sealed stably, uniformly, and with high quality, and the bonding strength between the separator 530 and 540 and the electrode 510, 520 and 550 may be improved. Therefore, the quality of the electrode assembly manufactured by the manufacturing method S700 thereof may be significantly improved.

### [CUTTING STEP]

**In** the cutting step S730, the cutting unit 300 may cut the electrode stack 500. As shown, the cutting unit 300 may cut the electrode stack 500 into the size unit of stack unit 500a as shown to manufacture a plurality of stack units 500a. Contrary to the drawings, the cutting unit 300 may also cut the electrode stack 500 into multiple size units of stack units 500a.

The cutting step S730 may be performed after the sealing step S720.

In addition, since the sealing step S720 of sealing the end portion of the electrode stack 500 in the second direction is performed before the cutting step S730 of cutting the electrode stack 500, equipment for fixing or aligning the electrode stack 500 is not necessary, or the electrode stack 500 may be quickly and easily fixed or aligned with simple equipment during the sealing step S720. As a result, the end portion of the electrode stack 500 in the second direction may be sealed easily and at low cost.

### [STACKING OR FOLDING STEP]

In the stacking or folding step S740, the electrode assembly may be manufactured by stacking and/or folding the stack unit 500a or folding the electrode stack 500 itself of a predetermined size (length).

First, a case where an electrode assembly is manufactured by stacking and/or folding stack units 500a will be described.

When the electrode stack 500 is cut into the size unit of stack unit 500a to manufacture a plurality of stack units 500a in the cutting step S730, the plurality of stack units 500a may be stacked and/or folded to manufacture an electrode assembly in the stacking or folding step S740. In this regard, description will be given with reference to FIGS. 11 to 14.

As shown in FIG. 11, in the stacking or folding step S740, a plurality (e.g., 4) of mono cells (stack unit 500a in FIGS. 1, 2 and 4) and one half cell (stack unit 500a in FIGS. 6 to 8) may be sequentially stacked from bottom to top to manufacture an electrode assembly.

In addition, as shown in FIG. 12, the mono cell (stack unit 500a) manufactured by the lamination apparatus 10 may be manufactured by stacking one more electrode and separator than the mono cells (stack units 500a) shown of FIGS. 2, 4 and 11, and in the stacking or folding step S740, a plurality of such mono cells (stack units 500a) and one half cell (stack unit 500a of FIGS. 6 to 8) may be sequentially stacked from bottom to top to manufacture an electrode assemblies.

The stack unit 500a manufactured by the lamination apparatus 10 as described above may be used in methods such as lamination and stacking (L&S) or advanced lamination and stacking as shown in FIGS. 11 and 12. Here, the number of electrode and separator of the stack unit 500a manufactured by the lamination apparatus 10 may vary.

As shown in FIG. 13, in the stacking or folding step S740, a plurality of (e.g., 4) bicells (stack unit 500a of FIGS. 1, 3 and 5) may be placed on one long separator SP and the separator SP may then be wound (folded) in one direction to stack the bicells, thereby manufacturing an electrode assembly.

As described above, the stack unit 500a manufactured by the lamination apparatus 10 may be used in a method such as stacking and folding (S&F) as shown in FIG. 13. Here, the number of electrode and separator of the stack unit 500a manufactured by the lamination apparatus 10 may vary.

As shown in FIG. 14, in the stacking or folding step S740, a plurality of (e.g., 4) bicells (stack units 500a of FIGS. 1, 3 and 5) are inserted between zigzag-folded one long separator SP to stack bicells, thereby manufacturing an electrode assembly.

The stack unit 500a manufactured by the lamination apparatus 10 as described above may be used in a method such as zigzag stacking or advanced zigzag stacking (AZS) as shown in FIG. 14. Here, the number of electrode and separator of the stack unit 500a manufactured by the lamination apparatus 10 may vary.

Next, a case will be described where an electrode assembly is manufactured by folding the electrode stack 500 of a predetermined size (length).

In the above-described cutting step S730, when the electrode stack 500 is cut into multiple size units of stack unit 500a or when the cutting step S730 is omitted without cutting, the electrode stack 500 may be folded using a zigzag method or a winding method, for example, to manufacture an electrode assembly wherein a plurality of electrode 510, 520, 530 of the electrode stack 500 are stacked vertically. That is, the stack unit 500a sealed by the lamination apparatus 10 may also be used to manufacture an electrode assembly by folding the stack unit 500a.

Here, in order to ensure that separator are placed between all stacked electrode when the electrode stack 500 is folded, additional separator may be stacked on, for example, the upper end of the electrode stack 500 in FIG. 4 or the upper and lower ends of the electrode stack 500 in FIG. 5. In addition, in order ensure that different types of electrode vertically face each other when the electrode stack 500 is folded, the types of electrode of the electrode piece 510a, 520a and 550a arranged side by side in the first direction may be different unlike shown in the drawings.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A lamination apparatus comprising:
a transport unit transporting, in a first direction intersecting a vertical direction, an electrode stack (500) formed by alternately stacking electrode (510, 520, 550) and separator (530, 540) in the vertical direction; and
a sealing unit (200) sealing the electrode stack (500) transported by the transport unit, and sealing an end portion of the electrode stack (500) in a second direction intersecting the vertical direction and the first direction while moving toward one side or other side of the second direction, and sealing a portion of the end portion of the electrode stack (500) in the second direction that comprises a portion overlapping in the first direction with end portion of the electrode (510, 520, 550) in the second direction.

2. The lamination apparatus of claim 1, wherein the sealing unit (200) seals the end portion of the electrode stack (500) in the second direction while moving toward the one side or the other side of the second direction and moving from inside to outside of the electrode stack (500).

3. The lamination apparatus of one of claims 1 and 2, further comprising a lamination unit (100), which presses and bonds the electrode stack (500) transported by the transport unit, and at least partially presses and bonds a center portion of the electrode stack (500) in the second direction,
wherein the sealing unit (200) seals the electrode stack (500) with the center portion in the second direction at least partially bonded by the lamination unit (100).

4. The lamination apparatus of any one of claims 1 to 3, wherein the electrode (510, 520, 550) comprise: body (512, 522, 552) at a center; and tab (514, 524, 554) protruding from the body (512, 522, 552) toward the one side or the other side of the second direction,
wherein the separator (530, 540) comprise extensions (532, 542) extending further toward the one side or the other side of the second direction than the body (512, 522, 552) of the electrode (510, 520, 550), the extensions (532, 542) facing or in contact with the tab (514, 524, 554) in the vertical direction, and
the end portion of the electrode stack (500) in the second direction sealed by the sealing unit (200) comprises at least portions of the extensions (532, 542).

5. The lamination apparatus of any one of claims 1 to 4, wherein the sealing unit (200) comprises a press unit (210) moving toward the one side or the other side of the second direction while contacting and pressing the electrode stack (500), the press unit (210) comprising at least one of: an upper press unit (212) disposed above the electrode stack (500) and moving toward the one side or the other side of the second direction while pressing the electrode stack (500) downward; and a lower press unit (214) disposed under the electrode stack (500) and moving toward the one side or the other side of the second direction while pressing the electrode stack (500) upward, and
the press unit (210), the upper press unit (212) and lower press unit (214) are rollers, respectively.

6. The lamination apparatus of claim 5, wherein the press unit (210) comprises the upper press unit (212) and the lower press unit (214).

7. The lamination apparatus of one of claims 5 and 6, wherein the electrode (510, 520, 550) comprise: body (512, 522, 552) at a center; and tab (514, 524, 554) protruding from the body (512, 522, 552), in a direction intersecting the vertical direction,
the separator (530, 540) comprise extensions (532, 542) extending further in the second direction than the body (512, 522, 552) of the electrode (510, 520, 550),
the end portion of the electrode stack (500) in the second direction sealed by the sealing unit (200) comprises at least portions of the extensions (532, 542), and
a diameter (D) of the press unit (210) of the sealing unit (200) is 0.5 to 5 times a width (E) of the extensions (532, 542) in the second direction.

8. The lamination apparatus of any one of claims 1 to 7, wherein the electrode (510, 520, 550) comprise a plurality of electrode piece (510a, 520a, 550a) on the separator (530, 540) arranged side by side and spaced apart from one another by a predetermined distance in the first direction, respectively, wherein each electrode piece (510a, 520a, 550a) including: body (512, 522, 552) at a center; and tab (514, 524, 554) protruding from the body (512, 522, 552), in a direction intersecting the vertical direction,
the separator (530, 540) comprise extensions (532, 542) extending further in the second direction than the body (512, 522, 552) of the electrode piece (510a, 520a, 550a),
the end portion of the electrode stack (500) in the second direction sealed by the sealing unit (200) comprises at least portions of the extensions (532, 542),
the sealing unit (200) comprises a press unit (210) moving toward the one side or the other side of the second direction while contacting and pressing the electrode stack (500),
a length (L) of the press unit (210) in the first direction being greater than a width (W) of the body (512, 522, 552) of each electrode piece (510a, 520a, 550a) in the first direction, and
the press unit (210) is arranged to completely overlap in the first direction with the body (512, 522, 552) of n electrode piece (510a, 520a, 550a) arranged consecutively when the electrode stack (500) is transported by the transport unit (where n is a natural number equal to or greater than 1).

9. The lamination apparatus of claim 8, wherein the tab (514, 524, 554) of the electrode piece (510a, 520a, 550a) protrude from the body (512, 522, 552) of the electrode piece (510a, 520a, 550a) toward the one side or the other side of the second direction,
the extensions (532, 542) of the separator (530, 540) extend further to the one side or the other side of the second direction than the body (512, 522, 552) of the electrode piece (510a, 520a, 550a), and the extensions (532, 542) facing or in contact with the tab (514, 524, 554) of the electrode piece (510a, 520a, 550a) in the vertical direction,
the press unit (210) is a roller and comprises n+1 pressing portions (P) spaced apart in the first direction, the n+1 pressing portions (P) being pressed toward the electrode stack (500) when sealing the one end or the other end of the electrode stack (500) in the second direction, the n+1 pressing portions (P) being two ends of the press unit (210) in the first direction and n-1 portions of the press unit (210) in the first direction at least partially overlapping with or adjacent to n-1 sections (S) between the n electrode piece (510a, 520a, 550a) in the first direction, respectively, and
the tab (514, 524, 554) of the n electrode piece (510a, 520a, 550a) are located between the n+1 pressing portions (P) in the first direction.

10. The lamination apparatus of any one of claims 1 to 9, wherein the sealing unit (200) comprises a press unit (210) moving toward the one side or the other side of the second direction while contacting and pressing the electrode stack (500),
the transport unit transports the electrode stack (500) in the first direction by per unit distance (U),
the press unit (210) seals a portion of the electrode stack (500) in contact with the press unit (210) each time the electrode stack (500) is transported by the unit distance (U), and
a width (RW) of the portion in the first direction or a length (L) of the press unit (210) in the first direction is equal to or greater than the unit distance (U).

11. The lamination apparatus of any one of claims 1 to 10, wherein the sealing unit (200) is heated.

12. A lamination apparatus comprising: a sealing unit (200) sealing an electrode stack (500) formed by alternately stacking electrode (510, 520, 550) and separator (530, 540) in vertical direction,
wherein the sealing unit (200) comprises: a first sealing unit (200a) sealing one end portion of the electrode stack (500) in a second direction intersecting the vertical direction while moving toward one side of the second direction, and sealing a portion of the one end portion of the electrode stack (500) in the second direction that comprises a portion overlapping in a first direction with one end portion of the electrode (510, 520, 550) in the second direction; and a second sealing unit (200b) sealing other end portion of the electrode stack (500) in the second direction while moving toward other side of the second direction, and sealing a portion of the other end portion of the electrode stack (500) in the second direction that comprises a portion overlapping in the first direction with the other end portion of the electrode (510, 520, 550) in the second direction.

13. A manufacturing method of electrode assembly using a lamination apparatus of claim 1, comprising:
a sealing step (S720) wherein a sealing unit (200) seals the electrode stack (500) transported by the transport unit, and seals the end portion of an electrode stack (500) in a second direction while moving toward the one side or the other side of a second direction.

14. The manufacturing method of claim 13, wherein, in the sealing step (S720), the sealing unit (200) moves toward the one side or the other side of the second direction, and seals the end portion of the electrode stack (500) in the second direction while moving from inside to outside of the electrode stack (500).

15. The manufacturing method of one of claims 13 and 14, wherein the lamination apparatus comprises: a lamination unit (100) pressing and bonding the electrode stack (500) transported by the transport unit and at least partially pressing and bonding a center portion of the electrode stack (500) in the second direction; or a cutting unit (300) cutting the electrode stack (500), and
further comprising:
a lamination step (S710) wherein the lamination unit (100) at least partially presses and bonds a center portion of the electrode stack (500) in the second direction transported by the transport unit; or
a cutting step (S730) wherein the cutting unit (300) cuts the electrode stack (500),
wherein the lamination step (S710) is performed before the sealing step (S720), and
the cutting step (S730) is performed after the sealing step (S720).

16. The manufacturing method of any one of claims 13 to 15, wherein the sealing unit (200) comprises a press unit (210) which moves toward the one side or the other side of the second direction while contacting and pressing the electrode stack (500), the press unit (210) comprising at least one of: an upper press unit (212) disposed above the electrode stack (500) and moving toward the one side or the other side of the second direction while pressing the electrode stack (500) downward; and a lower press unit (214) disposed under the electrode stack (500) and moving toward the one side or the other side of the second direction while pressing the electrode stack (500) upward,
the press unit (210), the upper press unit (212) and lower press unit (214) are rollers, and
in the sealing step (S720), the upper press unit (212), as a roller, moves toward the one side or the other side of the second direction while pressing the electrode stack (500) downward, or the lower press unit (214), as a roller, moves to the one side or the other side of the second direction while pressing the electrode stack (500) upward.

17. The manufacturing method of any one of claims 13 to 16, wherein the electrode (510, 520, 550) comprise a plurality of electrode piece (510a, 520a, 550a) on the separator (530, 540) arranged side by side and spaced apart from one another by a predetermined distance in the first direction, wherein each electrode piece (510a, 520a, 550a) includes: body (512, 522, 552) at a center; and tab (514, 524, 554) protruding from the body (512, 522, 552) in a direction intersecting the vertical direction,
the separator (530, 540) comprise extensions (532, 542) extending further in the second direction than the body (512, 522, 552) of the electrode piece (510a, 520a, 550a),
the end portion of the electrode stack (500) in the second direction sealed by the sealing unit (200) comprises at least portions of the extensions (532, 542),
the sealing unit (200) comprises a press unit (210) moving toward the one side or the other side of the second direction while contacting and pressing the electrode stack (500),
a length (L) of the press unit (210) in the first direction being greater than a width (W) of of the body (512, 522, 552) of the electrode piece (510a, 520a, 550a) in the first direction, and
the press unit (210) is arranged to completely overlap in the first direction with the body (512, 522, 552) of n electrode piece (510a, 520a, 550a) arranged consecutively when the electrode stack (500) is transported by the transport unit (where n is a natural number equal to or greater than 1), and
in the sealing step (S720), the press unit (210) seals an end portion of the electrode stack (500) in the second direction, and seals an end portion of the electrode stack (500) in the second direction comprising entirety of sections in the first direction corresponding to the n electrode piece (510a, 520a, 550a) consecutively arranged in the first direction.

18. The manufacturing method of claim 17, wherein the tab (514, 524, 554) of the electrode piece (510a, 520a, 550a) protrude from the body (512, 522, 552) of the electrode piece (510a, 520a, 550a) toward the one side or the other side of the second direction,
the extensions (532, 542) of the separator (530, 540) extend further to the one side or the other side of the second direction than the body (512, 522, 552) of the electrode piece (510a, 520a, 550a), the extensions (532, 542) facing or in contact with the tab (514, 524, 554) of the electrode piece (510a, 520a, 550a) in the vertical direction,
the press unit (210) is a roller and comprises n+1 pressing portions (P) spaced apart in the first direction, the n+1 pressing portions (P) being pressed toward the electrode stack (500) when sealing one end or other end of the electrode stack (500) in the second direction, the n+1 pressing portions (P) being two ends of the press unit (210) in the first direction and n-1 portions of the press unit (210) in the first direction at least partially overlapping with or adjacent to n-1 sections (S) between the n electrode piece (510a, 520a, 550a) in the first direction,
the tab (514, 524, 554) of the n electrode piece (510a, 520a, 550a) are located between the n+1 pressing portions (P) in the first direction, and
in the sealing step (S720), the n+1 pressing portions (P) of the press unit (210) are pressed toward the electrode stack (500).

19. The manufacturing method of any one of claims 13 to 18, wherein the sealing unit (200) comprises a press unit (210) which moves toward the one side or the other side of the second direction while contacting and pressing the electrode stack (500),
the transport unit transports the electrode stack (500) in the first direction by per unit distance (U),
the press unit (210) seals a portion of the electrode stack (500) in contact with the press unit (210) each time the electrode stack (500) is transported by the unit distance (U),
a width (RW) of the portion in contact with the press unit (210) in the first direction or a length (L) of the press unit (210) in the first direction is equal to or greater than the unit distance (U), and
in the sealing step (S720), the portion of the electrode stack (500) sealed by the press unit (210) after the electrode stack (500) is transported by the transport unit by the unit distance (U) is in contact with or partially overlaps a portion of the electrode stack (500) sealed by the press unit (210) before the electrode stack (500) is transported by the transport unit by the unit distance (U).

20. The manufacturing method of any one of claims 13 to 19, wherein the sealing unit (200) comprises: a first sealing unit (200a) sealing one end portion of the electrode stack (500) in a second direction intersecting the vertical direction while moving toward one side of the second direction, and sealing a portion of the one end portion of the electrode stack (500) in the second direction that comprises a portion overlapping in a first direction with one end portion of the electrode (510, 520, 550) in the second direction; and a second sealing unit (200b) sealing other end portion of the electrode stack (500) in the second direction while moving toward other side of the second direction, and sealing a portion of the other end portion of the electrode stack (500) in the second direction that comprises a portion overlapping in the first direction with other end portion of the electrode (510, 520, 550) in the second direction, and
in the sealing step (S720), the first sealing unit (200a) seals one end of the electrode stack (500) in the second direction while moving toward the one side of the second direction, and the second sealing unit (200b) seals other end of the second direction of the electrode stack (500) while moving toward the other side of the second direction.
